# EUROPÄISCHE PATENTANMELDUNG

(11) **EP 4 177 229 A1**
(43) Veröffentlichungstag der Anmeldung: **10.05.2023**
(21) Anmeldenummer: 21207140.1
(22) Anmeldetag: 09.11.2021
(51) Int. Cl.: C04B 26/06, C04B 26/14, C04B 26/16, C04B 40/06, E21D 20/02, C09J 4/00, C04B 26/18

(54) **ZIEGELMEHL ALS FÜLLSTOFF IN MEHRKOMPONENTEN-SYSTEMEN FÜR DIE CHEMISCHE BEFESTIGUNG**

(71) Anmelder: Hilti Aktiengesellschaft, 9494 Schaan (LI)
(72) Erfinder: Gnaß, Beate, 86368 Gersthofen (DE); Nickerl, Georg, 86911 Dießen am Ammersee (DE); Bürgel, Thomas, 86899 Landsberg (DE); Kumru, Memet-Emin, 86199 Augsburg (DE)
(74) Vertreter: Hilti Aktiengesellschaft Corporate Intellectual Property

(57) **Zusammenfassung**

Die vorliegende Erfindung betrifft eine Reaktivharzkomponente (A) für ein Mehrkomponenten-System sowie ein Mehrkomponenten-System zur chemischen Befestigung von Konstruktionselementen enthaltend Ziegelmehl als Füllstoff. Der Einsatz von Ziegelmehl als Füllstoff in der Reaktivharzkomponente (A) erhöht die Leistungsfähigkeit einer Befestigungsanordnung, welche eine aus dem erfindungsgemäßen Mehrkomponenten-System hergestellte Mörtelmasse und ein Befestigungsmittel umfasst, bei Applikation der Mörtelmasse in ein mit Wasser gefülltes Bohrloch.

## Beschreibung

### BESCHREIBUNG

Die vorliegende Erfindung betrifft eine Reaktivharzkomponente (A) auf Basis radikalisch härtbarer Verbindungen für ein Mehrkomponenten-System sowie ein Mehrkomponenten-System zur chemischen Befestigung von Konstruktionselementen enthaltend Ziegelmehl als Füllstoff. Der Einsatz von Ziegelmehl als Füllstoff in der Reaktivharzkomponente (A) erhöht die Leistungsfähigkeit einer Befestigungsanordnung, welche eine aus dem erfindungsgemäßen Mehrkomponenten-System hergestellte Mörtelmasse und ein Befestigungsmittel umfasst, bei der die Applikation der Mörtelmasse in ein mit Wasser gefülltes Bohrloch erfolgt.

### Hintergrund

Die Verwendung von Reaktivharzkomponenten auf Basis radikalisch polymerisierbarer Verbindungen zur Herstellung von chemischen Dübeln ist in den unterschiedlichsten Bereichen, unter anderem im Baubereich, seit langem bekannt.

Chemische Dübel kommen regelmäßig sowohl im Innen- als auch im Außenbereich zum Einsatz. Das Setzen eines Verankerungspunktes findet somit unter den verschiedensten Bedingungen und Einflüssen statt. Die Bedingungen und Einflüsse, unter denen der chemische Dübel in das Bohrloch eingebracht wird, sollen möglichst keine negativen Auswirkungen auf das Lastniveau des ausgehärteten chemischen Dübels haben.

Ein häufig auf einer Baustelle auftretender Fall ist das Setzen einer Ankerstange bei Niederschlag. In diesen Fällen ist das mit der Mörtelmasse zu befüllende Bohrloch mit Wasser gefüllt. Bei den üblichen auf dem Markt befindliche Zweikomponenten-Systemen zur Herstellung eines chemischen Dübels führt ein mit Wasser gefülltes Bohrloch im Setzvorgang regelmäßig zu einer Erniedrigung des Lastniveaus des chemischen Dübels.

Es besteht daher Bedarf an der Bereitstellung von Mehrkomponenten-Systemen zur Herstellung von chemischen Dübeln, deren Lastniveau nicht negativ durch ein mit Wasser gefülltes Bohrloch während des Setzvorgangs beeinflusst wird. Die zu erreichenden Lastwerte sollen dabei mindestens vergleichbar sein mit den Lastwerten chemischer Dübel, die aus konventionelle Mehrkomponenten-Systemen auf Basis radikalisch härtender Verbindungen hergestellt werden.

### Beschreibung der Erfindung

Überraschenderweise zeigte sich, dass durch den Einsatz von Ziegelmehl als Füllstoff in einer Reaktivharzkomponente (A) eines Mehrkomponenten-Systems basierend auf radikalisch härtbaren Verbindungen die Verbundspannung der gehärteten Mörtelmasse gegenüber vergleichbaren Mörtelmassen ohne den Zusatz von Ziegelmehl verbessert werden konnte.

Ein erster Gegenstand der Erfindung ist eine Reaktivharzkomponente (A) auf Basis radikalisch härtbarer Verbindungen für ein Mehrkomponenten-System enthaltend Ziegelmehl als Füllstoff.

Ein zweiter Gegenstand der Erfindung ist ein Mehrkomponenten-System enthaltend die erfindungsgemäße Reaktivharzkomponente (A) gemäß Anspruch 10.

Ein dritter Gegenstand der Erfindung ist ein die Verwendung von Ziegelmehl in einem Mehrkomponenten-System gemäß Anspruch 14 zur Erhöhung der Leistungsfähigkeit einer Befestigungsanordnung, bei der die aus dem Mehrkomponenten-System hergestellte Mörtelmasse in ein mit Wasser gefülltes Bohrloch appliziert wurde.

Im Sinne der Erfindung bedeuten die verwendeten Begriffe:
- *"Ziegelmehl"* ein durch das Mahlen von Ziegelsteinen gewonnenes Pulver. Unter dem Begriff des Ziegelsteins im Sinne der vorliegenden Erfindung sind alle Mauerziegel im Sinne der DIN EN 771-1 zu verstehen. Demnach sind Mauerziegel Mauersteine, die aus Ton oder anderen tonhaltigen Stoffen mit oder ohne Sand oder andere Zusätze bei einer ausreichend hohen Temperatur gebrannt werden, um einen keramischen Verbund zu erzielen. Unter dem Begriff des Mauersteins ist ein vorgeformtes Element zur Herstellung von Mauerwerk zu verstehen. Alternativ oder in Kombination mit Mauerziegeln können auch Dachziegel zur Herstellung des Ziegelmehls verwendet werden.
- *"Reaktivharzmischung"* eine Mischung aus radikalisch härtbarer Verbindung, einem oder mehreren Inhibitoren, einem oder mehreren Reaktivverdünnern und gegebenenfalls weiteren Additiven; die Reaktivharzmischung ist typischerweise flüssig oder viskos und kann zu einer Reaktivharzkomponente weiterverarbeitet werden;
- *"Inhibitor"* einen Stoff, der eine unerwünschte radikalische Polymerisation während der Synthese oder der Lagerung eines Harzes oder einer Harz-haltigen Zusammensetzung unterdrückt (diese Stoffe werden in Fachkreisen auch als *"Stabilisator"* bezeichnet) bzw. der eine radikalische Polymerisation eines Harzes nach Zugabe eines Initiators (üblicherweise in Verbindung mit einem Beschleuniger) zeitlich verzögert (diese Stoffe werden in Fachkreisen auch als *"Inhibitor"* bezeichnet; die jeweilige Bedeutung des Begriffes erschließt sich aus dem Kontext);
- *"Initiator"* einen Stoff, der (üblicherweise in Kombination mit einem Beschleuniger) reaktionsinitiierende Radikale bildet;
- *"Beschleuniger"* ein Reagenz, welches mit dem Initiator eine Reaktion eingeht, so dass bereits bei niedrigen Temperaturen durch den Initiator größere Mengen an Radikalen erzeugt werden, oder welches die Zerfallsreaktion des Initiators katalysiert;
- *"Reaktivverdünner"* flüssige oder niedrigviskose Monomere und Backbone-Harze, welche andere Backbone-Harze oder den Reaktivharz-Masterbatch verdünnen und dadurch die zu deren Applikation notwendige Viskosität verleihen, zur Reaktion mit dem Backbone-Harz befähigte funktionelle Gruppen enthalten und bei der Polymerisation (Härtung) zum überwiegenden Teil Bestandteil der gehärteten Masse (z.B. des Mörtels) werden; Reaktivverdünner werden auch co-polymerisierbares Monomer genannt;
- *"Reaktivharzkomponente"* eine flüssige oder viskose Mischung aus Reaktivharz, Füllstoffen, Reaktivverdünnern und optional weiteren Komponenten, z.B. Füllstoffen, Additiven; typischerweise ist die Reaktivharzkomponente eine der beiden Komponenten eines Zweikomponenten-Reaktivharz-Systems zur chemischen Befestigung;
- *"Härterkomponente"* eine Zusammensetzung, die einen Initiator für die Polymerisation einer radikalisch härtbaren Verbindung enthält; die Härterkomponente kann fest oder flüssig sein und neben dem Initiator ein Lösungsmittel sowie Füllstoffe und/oder Additive enthalten; typischerweise ist die Härterkomponente neben der Reaktivharzkomponente die andere der beiden Komponenten eines Zweikomponenten-Reaktivharz-Systems zur chemischen Befestigung;
- *"Zweikomponenten-System"* bzw. *"Zweikomponenten-Reaktivharz-System"* ein Reaktivharz-System, das zwei voneinander getrennt gelagerte Komponenten, eine Reaktivharzkomponente (A) und eine Härterkomponente (B), umfasst, so dass eine Härtung des in der Reaktivharzkomponente enthaltenen Backbone-Harzes erst nach dem Mischen der beiden Komponenten erfolgt;
- *"Mehrkomponenten-System"* bzw. *"Mehrkomponenten-Reaktivharz-System"* ein Reaktivharz-System, das mehrere voneinander getrennt gelagerte Komponenten umfasst, unter anderem eine Reaktivharzkomponente (A) und eine Härterkomponente (B), so dass eine Härtung des in der Reaktivharzkomponente enthaltenen Backbone-Harzes erst nach dem Mischen aller Komponenten erfolgt;
- *"(Meth)acryl...*/*.. (meth)acryl...",* dass sowohl die "Methacryl.../... methacryl... "- als auch die "Acryl.../...acryl... "-Verbindungen gemeint sein sollen; bevorzugt sind in der vorliegenden Erfindung "Methacryl... /... methacryl... "-Verbindungen gemeint;
- *"Epoxy(meth)acrylat"* ein Epoxidharz, das Acrylat- oder Methacrylatgruppen aufweist und im wesentlichen Epoxygruppen-frei ist;
- *"Alkyl"* einen gesättigten Kohlenwasserstoffrest, der verzweigt oder unverzweigt sein kann; bevorzugt ein C₁-C₇-Alkyl, besonders bevorzugt ein C₁-C₄-Alkyl, also ein Alkyl ausgewählt aus der Gruppe bestehend aus Methyl, Ethyl, n-Propyl, iso-Propyl, n-Butyl, iso-Butyl, und tert-Butyl; Methyl, Ethyl und tert-Butyl sind besonders bevorzugt, und ganz besonders bevorzugt ist Methyl;
- *"Hydroxyalkyl"* ein Alkyl, das mindestens eine Hydroxylgruppe als Substituenten trägt;
- *"Alkenyl"* einen ungesättigten Kohlenwasserstoffrest mit mindestens einer Doppelbindung, der verzweigt oder unverzweigt sein kann; bevorzugt ein C₂-C₂₀-Alkenyl, besonders bevorzugt ein C₂-C₆-Alkenyl, also ein Alkenyl ausgewählt aus der Gruppe bestehend aus Ethenyl, Propenyl, Butenyl, Pentenyl und Hexenyl; Ethenyl, Propenyl und Butenyl sind besonders bevorzugt, und ganz besonders bevorzugt ist Ethenyl;
- *"Alkinyl"* einen ungesättigten Kohlenwasserstoffrest mit mindestens einer Dreifachbindung, der verzweigt oder unverzweigt sein kann; bevorzugt ein C₂-C₂₀-Alkinyl, besonders bevorzugt ein C₂-C₆-Alkinyl, also ein Alkinyl ausgewählt aus der Gruppe bestehend aus Ethinyl, Propinyl, Butinyl, Pentinyl und Hexinyl; Ethinyl, Propinyl und Butinyl sind besonders bevorzugt, und ganz besonders bevorzugt ist Ethinyl;
- *"kalthärtend",* dass ein Reaktivharz-System bei Raumtemperatur vollständig aushärten kann;
- *"ein", "eine", "einer"* als Artikel vor einer chemischen Verbindungsklasse, z.B. vor dem Wort "Epoxymethacrylat", dass eine oder mehrere unter diese chemische Verbindungsklasse fallende Verbindungen, z.B. verschiedene Epoxymethacrylate, gemeint sein können. In einer bevorzugten Ausführungsform ist mit diesem Artikel nur eine einzelne Verbindung gemeint;
- *"mindestens ein", "mindestens eine", "mindestens einer"* zahlenmäßig *"ein oder mehrere".* In einer bevorzugten Ausführungsform ist mit diesem Begriff zahlenmäßig *"ein", "eine", "einer"* gemeint;
- *"enthalten", "umfassen"* und *"beinhalten",* dass neben den genannten Bestandteilen noch weitere vorhanden sein können. Diese Begriffe sind einschließlich gemeint und umfassen daher auch *"bestehen aus". "Bestehen aus"* ist abschließend gemeint und bedeutet, dass keine weiteren Bestandteile vorhanden sein können. In einer bevorzugten Ausführungsform bedeuten die Begriffe *"enthalten", "umfassen"* und *"beinhalten"* den Begriff *"bestehen aus"*;
- *"etwa"* oder *"circa"* oder "*ca*." vor einem Zahlenwert einen Bereich von ± 5% dieses Wertes, bevorzugt ± 2% dieses Wertes, bevorzugter ± 1% dieses Wertes, besonders bevorzugt ± 0% dieses Wertes (also genau diesen Wert).

Alle in diesem Text genannten Normen (z.B. DIN-Normen) wurden in der zum Anmeldetag dieser Anmeldung aktuellen Ausgabe verwendet.

### Ziegelmehl als Füllstoff

Gemäß der vorliegenden Erfindung umfasst die erfindungsgemäße Reaktivharzkomponente (A) Ziegelmehl als Füllstoff.

Der Begriff des Ziegelmehls im Sinne der vorliegenden Erfindung beschreibt ein durch Zerkleinern oder Mahlen von Mauerziegeln gewonnenes Pulver bzw. Granulat. Zum Zerkleinern und/oder Mahlen der Mauerziegel kommen üblicherweise Hammerbrecher zum Einsatz.

Im Anschluss an den Mahlprozess wird das Ziegelmehl üblicherweise einem Siebprozess unterworfen. Durch die Wahl des/der Siebe/s mit einer definierten Maschenweite im Siebprozess wird die Partikelgröße des verwendeten Ziegelmehls auf einen definierten Partikelgrößenbereich eingestellt. So weist beispielsweise das Ziegelmehl bei der Verwendung eines Siebes mit einer Maschenweite von 0,5 mm Partikel mit einer Größe von ≤ 0,5 mm auf (Partikelgrößenbereich > 0 bis 0,5 mm). Bedingt durch die unterschiedliche Orientierung der Partikel des Ziegelmehls während des Siebprozesses ist es aber auch möglich, dass ein geringfügiger Anteil der Partikel größer ist als die Maschenweite des Siebes. Dies kommt insbesondere bei asymmetrisch geformten Partikeln zum Tragen (bspw. stäbchenförmig). Um diesem Umstand Rechnung zu tragen, wird zur Spezifikation der Partikelgröße im Rahmen der vorliegenden Erfindung der sogenannten d₉₀-Wert verwendet. Der d₉₀-Wert ist ein Parameter, der angibt, dass 90% des Probenvolumens einen kleineren Partikelgröße aufweisen als den angegebenen Wert. Für die vorliegende Erfindung ist es wichtig, dass die Partikelgröße der verbleibenden 10 % des Probenvolumens nicht beliebig groß sind, da dies zu Problemen bei der Verarbeitbarkeit der Mörtelmasse führt. Vorzugsweise haben die Partikel des verwendeten Ziegelmehls einen maximalen Partikeldurchmesser von 2 mm, bevorzugt 1,5 mm, noch mehr bevorzugt 1,0 mm. Der d₉₀-Wert wird im Rahmen der vorliegenden Erfindung mittels statischer Lichtstreuung (Gerät: Beckman Coulter LS 13 320 / Dry Powder System) bestimmt.

Das erfindungsgemäß als Füllstoff verwendete Ziegelmehl hat bevorzugt einen d₉₀-Wert von ≤ 0,90 mm, bevorzugter von ≤ 0,85 mm, weiter bevorzugt von ≤ 0,80 mm. In einer besonderes bevorzugten Ausführungsform hat das Ziegelmehl einen d₉₀-Wert in einem Bereich von 0,9 mm bis 0,2 mm, bevorzugt in einem Bereich von 0,85 mm bis 0,25 mm, weiter bevorzugt in einem Bereich von 0,80 mm bis 0,25 mm.

Bevorzugt haben die kleinsten Partikel des verwendeten Ziegelmehls einen Partikeldurchmesser von ≥ 0,1 µm, weiter bevorzugt von ≥ 0,3 µm.

Zur Herstellung der erfindungsgemäß zu verwendenden Ziegelmehle werden im Siebprozess vorzugsweise Siebe mit einer Maschenweite in einem Bereich von 0,20 mm bis 0,90 mm, bevorzugt von 0,20 bis 0,85 mm, weiter bevorzugt 0,25 mm bis 0,80 mm verwendet.

Kommerziell sind die erfindungsgemäß zu verwendenden Ziegelmehle beispielsweise von der Fa. Pilosith Gmbh, der Peter Stadler GmbH oder der Kalkladen GmbH erhältlich.

Vorzugsweise weist das Ziegelmehl einen Wassergehalt von weniger als 1,0 Gew.-% auf, bevorzugt weniger als 0,2 Gew.-%. Zur Reduktion des Wassergehaltes wird das Ziegelmehl üblicherweise bei 120 °C in einem Ofen für 48 Stunden getrocknet.

Vorzugsweise umfasst die Reaktivharzkomponente (A) mindestens 10 Gew.-% Ziegelmehl bezogen auf das Gesamtgewicht der Reaktivharzkomponente. Das Ziegelmehl ist vorzugsweise in einem gewichtsprozentualen Anteil von 10 bis 70 Gew.-% bezogen auf das Gesamtgewicht der Reaktivharzkomponente, insbesondere in einem Anteil von 20 bis 60 Gew.-%, noch weiter bevorzugt in einem Anteil von 20 bis 50 Gew.-% in der erfindungsgemäßen Reaktivharzkomponente (A) enthalten.

In einer weiteren Ausführungsform der Erfindung kann das Ziegelmehl zusätzlich auch in der Härterkomponente (B) enthalten sein, es ist allerdings bevorzugt, dass die Härterkomponente (B) frei von Ziegelmehl ist.

### Reaktivharz

Die Reaktivharzkomponente (A) umfasst als Reaktivharz mindestens eine radikalisch härtbare Verbindung. Als radikalisch härtbare Verbindungen sind ethylenisch ungesättigte Verbindungen, Verbindungen mit Kohlenstoff-Kohlenstoff-Dreifachbindungen und Thiol-Yn/En-Harze geeignet, wie sie dem Fachmann bekannt sind.

Von diesen Verbindungen ist die Gruppe der ethylenisch ungesättigten Verbindungen bevorzugt, die Styrol und Derivate davon, (Meth)acrylate, Vinylester, ungesättigte Polyester, Vinylether, Allylether, Itaconate, Dicyclopentadien-Verbindungen und ungesättigte Fette umfasst, wovon insbesondere ungesättigte Polyesterharze und Vinylesterharze geeignet und beispielsweise in den Anmeldungen EP 1 935 860 A1, DE 195 31 649 A1 und WO 10/108939 A1 beschrieben sind. Vinylesterharze sind dabei aufgrund ihrer hydrolytischen Beständigkeit und ausgezeichneten mechanischen Eigenschaften am stärksten bevorzugt.

Beispiele geeigneter ungesättigter Polyester werden in folgende Kategorien eingeteilt:
(1) Ortho-Harze: diese basieren auf Phthalsäureanhydrid, Maleinsäureanhydrid oder Fumarsäure und Glykolen, wie 1,2-Propylenglykol, Ethylenglykol, Diethylenglykol, Triethylenglykol, 1,3-Propylenglykol, Dipropylenglykol, Tripropylenglykol, Neopentylglykol oder hydrogeniertes Bisphenol-A;
(2) Iso-Harze: diese werden aus Isophthalsäure, Maleinsäureanhydrid oder Fumarsäure und Glykolen hergestellt. Diese Harze können höhere Anteile an Reaktivverdünnern enthalten als die Ortho-Harze;
(3) Bisphenol-A-fumarate: diese basieren auf ethoxyliertem Bisphenol-A und Fumarsäure;
(4) HET-Säure-Harze (Hexachloro-endo-methylen-tetrahydrophthalsäure-Harze): sind Harze, die aus Chlor/Brom enthaltenden Anhydriden oder Phenolen bei der Herstellung von ungesättigten Polyesterharzen gewonnen werden.

Neben diese Harzklassen können noch die sogenannten Dicyclopentadien-Harze (DCPD-Harze) als ungesättigte Polyesterharze unterschieden werden. Die Klasse der DCPD-Harze wird entweder durch Modifikation eines der oben genannten Harztypen durch Diels-Alder-Reaktion mit Cyclopentadien erhalten, oder sie werden alternativ durch eine erste Reaktion eines Diacids, z.B. Maleinsäure, mit Dicyclopentadien, und anschließend durch eine zweite Reaktion, der gewöhnlichen Herstellung eines ungesättigten Polyesterharzes erhalten, wobei man bei letzterem von einem DCPD-Maleatharz spricht.

Das ungesättigte Polyesterharz hat bevorzugt ein Molekulargewicht Mn im Bereich von 500 bis 10.000 Dalton, stärker bevorzugt im Bereich von 500 bis 5000 und noch stärker bevorzugt im Bereich von 750 bis 4000 (nach ISO 13885-1). Das ungesättigte Polyesterharz hat einen Säurewert im Bereich 0 bis 80 mg KOH/g Harz, bevorzugt im Bereich von 5 bis 70 mg KOH/g Harz (nach ISO 2114-2000). Wird ein DCPD-Harz als ungesättigtes Polyesterharz verwendet beträgt der Säurewert bevorzugt 0 bis 50 mg KOH/g Harz.

Im Sinne der Erfindung sind Vinylesterharze Oligomere oder Polymere mit mindestens einer (Meth)acrylat-Endgruppe, so genannte (Meth)acrylat-funktionalisierte Harze, wozu auch Urethan(meth)acrylat-Harze und Epoxy(meth)acrylate zählen.

Vinylesterharze, die nur in Endstellung ungesättigten Gruppen aufweisen, werden zum Beispiel durch Umsetzung von Epoxid-Oligomeren oder -Polymeren (z.B. Bisphenol A-digylcidylether, Epoxide vom Phenol-Novolak-Typ oder Epoxid-Oligomere auf der Basis von Tetrabrombisphenol A) mit beispielsweise (Meth)acrylsäure oder (Meth)acrylamid erhalten. Bevorzugte Vinylester-Harze sind (Meth)acrylat-funktionalisierte Harze und Harze, die durch Umsetzung eines Epoxid-Oligomeren oder -Polymeren mit Methacrylsäure oder Methacrylamid, bevorzugt mit Methacrylsäure, erhalten werden. Beispiele solcher Verbindungen sind aus den Anmeldungen US 3297745 A, US 3772404 A, US 4618658 A, GB 2217722 A1, DE 3744390 A1 und DE 4131457 A1 bekannt. In diesem Zusammenhang wird auf die Anmeldung US 2011/071234 verwiesen.

Das Vinylester-Harz hat bevorzugt ein Molekulargewicht Mn im Bereich von 500 bis 3000 Dalton, stärker bevorzugt 500 bis 1500 Dalton (nach ISO 13885-1). Das Vinylester-Harz hat einen Säurewert im Bereich von 0 bis 50 mg KOH/g Harz, bevorzugt im Bereich von 0 bis 30 mg KOH/g Harz (nach ISO 2114-2000).

Als Vinylesterharz besonders geeignet sind ethoxyliertes Bisphenol-A-di(meth)acrylat mit einem Ethoxylierungsgrad von 2 bis 10, vorzugsweise von 2 bis 4, difunktionelle, trifunktionelle oder höherfunktionelle Urethan(meth)acrylat-Oligomere oder Mischungen dieser härtbaren Bestandteile.

Beispiele für derartige Epoxy(meth)acrylate sind solche der Formel (I) 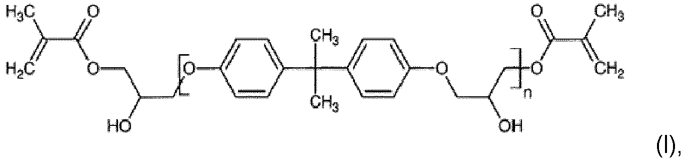 worin n für eine Zahl grösser oder gleich 1 steht (wenn Gemische verschiedener Moleküle mit unterschiedlichen n-Werten vorliegen und durch die Formel (I) repräsentiert werden, sind auch nicht-ganzzahlige Zahlen als Mittelwert möglich).

Weitere Beispiele für die propoxylierten oder insbesondere ethoxylierten aromatischen Diol-, wie Bisphenol-A-, Bisphenol-F- oder Novolak- (insbesondere di-)(meth)acrylate sind solche der Formel (II) 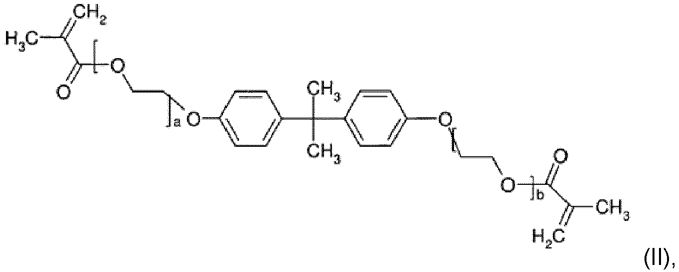 worin a und b jeweils unabhängig voneinander für eine Zahl grösser oder gleich 0 stehen mit der Maßgabe, dass vorzugsweise mindestens einer der Werte grösser als 0 ist, vorzugsweise beide 1 oder grösser sind (wenn Gemische verschiedener Moleküle mit unterschiedlichen (a und b)-Werten vorliegen und durch die Formel (II) repräsentiert werden, sind auch nicht-ganzzahlige Zahlen als Mittelwert möglich).

Ganz besonders geeignet sind die bekannten Reaktionsprodukte aus Di- oder Polyisocyanaten und Hydroxyalkylmethylacrylaten, wie sie beispielsweise in der DE 2 312 559 A1 beschrieben sind, Addukte aus (Di)Isocyanaten und 2,2-Propanbis-[3-(4-phenoxy)-1,2-hydroxypropan-1-methacrylat] nach der US-PS 3 629 187 sowie die Addukte aus Isocyanaten und Methacryloylalkylethern, -alkoxybenzolen bzw. -alkoxycycloalkanen, wie sie in der EP 44352 A1 beschrieben sind. In diesem Zusammenhang wird auf die DE 2312559 A1, DE 19902685 A1, EP 0684906 A1, DE 4111828 A1 und DE 19961342 A1 verwiesen. Selbstverständlich können auch Gemische aus geeigneten Monomeren verwendet werden.

All diese Harze, die erfindungsgemäß bevorzugt verwendet werden können, können gemäß dem Fachmann bekannten Verfahren modifiziert werden, um zum Beispiel geringere Säurezahlen, Hydroxidzahlen oder Anhydridzahlen zu erreichen, oder durch das Einbringen von flexiblen Einheiten in das Grundgerüst flexibler gemacht werden, und dergleichen.

Darüber hinaus kann das reaktivharz noch andere reaktive Gruppen, die mit einem Radikalinitiator, wie Peroxiden, polymerisiert werden können, enthalten, zum Beispiel reaktive Gruppen, die von der Itaconsäure, Citraconsäure und allylischen Gruppen und dergleichen abgeleitet sind, wie sie beispielsweise in der WO 2010/108939 A1 (Itaconsäureester) beschrieben sind.

Der Anteil des Reaktivharzes in der Reaktivharzkomponente beträgt bevorzugt von etwa 10 bis etwa 70 Gew.-%, stärker bevorzugt von etwa 20 bis etwa 60 Gew.-%, noch stärker bevorzugt von etwa 25 bis etwa 50 Gew.-%, bezogen auf die Reaktivharzkomponente.

### Reaktivverdünner

Die Reaktivharzkomponente (A) kann geeignete Reaktivverdünner enthalten, wie sie in den Anmeldungen EP 1 935 860 A1 und DE 195 31 649 A1 beschrieben sind. Vorzugsweise enthält die Reaktivharzkomponente (A) als Reaktivverdünner einen (Meth)acrylsäureester, wobei besonders bevorzugt aliphatische oder aromatische C₅-C₁₅-(Meth)acrylate ausgewählt werden. Geeignete Beispiele umfassen: 2-, 3-Hydroxypropyl(meth)acrylat (HP(M)A), 1,3-Propandioldi(meth)acrylat, 1,3-Butandioldi(meth)acrylat, 1,4-Butandioldi(meth)acrylat, Trimethylolpropantri(meth)acrylat, Phenethyl(meth)acrylat, Tetrahydrofurfuryl(meth)acrylat, *N*,*N*-Dimethylaminoethyl(meth)acrylat, *N,N-*Dimethylaminomethyl(meth)acrylat, Acetoacetoxyethyl(meth)acrylat, Isobornyl(meth)acrylat, 2-Ethylhexyl(meth)acrylat, Methoxypolyethylenglykol-mono(meth)acrylat, Trimethylcyclohexyl(meth)acrylat, 2-Hydroxyethyl(meth)acrylat, Dicyclopentenyloxyethyl(meth)acrylat und/oder Tricyclopentadienyldi(meth)acrylat, Bisphenol-A-(meth)acrylat, Novolakepoxidi(meth)acrylat, Di-[(meth)acryloyl-maleoyl]-tricyclo-5.2.1.0.^{2.6}-decan, Dicyclopentenyloxyethylcrotonat, 3-(Meth)acryloyl-oxymethyl-tricylo-5.2.1.0.^{2.6}-decan, 3-(Meth)cyclopentadienyl(meth)acrylat, und Decalyl-2-(meth)acrylat; Solketal(meth)acrylat, Cyclohexyl(meth)acrylat, Phenoxyethyldi(meth)acrylat, Methoxyethyl(meth)acrylat, *tert*-Butyl(meth)acrylat und Norbornyl(meth)acrylat. Methacrylate sind gegenüber Acrylaten bevorzugt. Besonders bevorzugt sind 2- und 3-Hydroxypropylmethacrylat (HPMA), 1,2-Ethandioldimethacrylat, 1,4-Butandioldimethacrylat (BDDMA), 1,3-Butandioldimethacrylat, Trimethylolpropantrimethacrylat, Acetoacetoxyethylmethacrylat, Isobornylmethacrylat, Bisphenol-A-methacrylat, Trimethylcyclohexylmethacrylat, 2-Hydroxyethylmethacrylat, PEG200-dimethacrylat und Norbornylmethacrylat. Ganz besonders bevorzugt sind 1,4-Butandioldimethacrylat und ein Gemisch aus 2- und 3-Hydroxypropylmethacrylat (HPMA), oder eine Mischung aus diesen drei Methacrylaten. Am bevorzugtesten ist ein Gemisch aus 2- und 3-Hydroxypropylmethacrylat (HPMA). Grundsätzlich können auch andere übliche radikalisch polymerisierbare Verbindungen, allein oder im Gemisch mit den (Meth)acrylsäureestern, als Reaktivverdünner eingesetzt werden, z. B. Styrol, α-Methylstyrol, alkylierte Styrole, wie *tert*-Butylstyrol, Divinylbenzol und Vinyl- sowie Allylverbindungen, wobei die nicht kennzeichnungspflichtigen Vertreter davon bevorzugt sind. Beispiele für derartige Vinyl- oder Allylverbindungen sind Hydroxybutylvinylether, Ethylenglykoldivinylether, 1,4-Butandioldivinylether, Trimethylolpropandivinylether, Trimethylolpropantrivinylether, Mono-, Di-, Tri-, Tetra- und Polyalkylenglykolvinylether, Mono-, Di-, Tri-, Tetra- und Polyalkylenglykolallylether, Adipinsäuredivinylester, Trimethylolpropandiallylether und Trimethylolpropantriallylether.

Die Reaktivverdünner sind bevorzugt in einer Menge bis etwa 80 Gew.-%, besonders bevorzugt von etwa 10 bis etwa 60 Gew.-%, noch bevorzugter von etwa 30 bis etwa 60 Gew.-%, bezogen auf die Reaktivharzkomponente (A), im Reaktivharz vorhanden.

### Inhibitoren

Sowohl zur Stabilisierung des Reaktivharzes oder der das Reaktivharz enthaltenden Reaktivharzkomponente (A), als auch zur Einstellung der Harzreaktivität können in der erfindungsgemäßen Reaktivharzkomponente (A) ein oder mehrere Inhibitoren vorhanden sein.

Hierfür sind die für radikalisch polymerisierbare Verbindungen üblicherweise verwendeten Inhibitoren geeignet, wie sie dem Fachmann bekannt sind. Bevorzugt sind diese Inhibitoren unter phenolischen Inhibitoren und nicht-phenolischen Inhibitoren, insbesondere Phenothiazinen, ausgewählt.

Als phenolische Inhibitoren sind Phenole, wie 2-Methoxyphenol, 4-Methoxyphenol, 2,6-Di-tert-butyl-4-methylphenol, 2,4-Di-tert-butylphenol, 2,6-Di-tert-butylphenol, 2,4,6-Trimethylphenol, 2,4,6-Tris(dimethylaminomethyl)phenol, 4,4'-Thio-bis(3-methyl-6-tert-butylphenol), 4,4'-Isopropylidendiphenol, 6,6'-Di-tert-butyl-4,4'-bis(2,6-di-tert-butylphenol), 1,3,5-Trimethyl-2,4,6-tris(3,5-di-tert-butyl-4-hydroxybenzyl)benzol, 2,2'-Methylen-di-p-cresol, Catechole, wie Brenzkatechin, und Catecholderivate, wie Butylbrenzkatechine, wie 4-tert-Butylbrenzkatechin und 4,6-Di-tert-butylbrenzkatechin, Hydrochinone, wie Hydrochinon, 2-Methylhydrochinon, 2-tert-Butylhydrochinon, 2,5-Di-tert-butylhydrochinon, 2,6-Di-tert-butylhydrochinon, 2,6-Dimethylhydrochinon, 2,3,5-Trimethylhydrochinon, Benzochinon, 2,3,5,6-Tetrachloro-1,4-benzochinon, Methylbenzochinon, 2,6-Dimethylbenzochinon, Naphthochinon, oder Gemische von zweien oder mehreren davon, geeignet. Diese Inhibitoren sind oft Bestandteil von kommerziellen radikalisch härtenden Reaktivharzkomponenten.

Als nicht-phenolische Inhibitoren kommen vorzugsweise Phenothiazine, wie Phenothiazin und/oder Derivate oder Kombinationen davon, oder stabile organische Radikale, wie etwa Galvinoxyl- und *N*-Oxyl-Radikale, insbesondere vom Piperidinyl-*N-*oxyl- oder Tetrahydropyrrol-*N*-oxyl-Typ, in Betracht, wie Aluminium-*N-*nitrosophenylhydroxylamin, Diethylhydroxylamin, Oxime, wie Acetaldoxim, Acetonoxim, Methylethylketoxim, Salicyloxim, Benzoxim, Glyoxime, Dimethylglyoxim, Aceton-O-(benzyloxycarbonyl)oxim, TEMPOL, TEMPO und dergleichen.

Ferner können in para-Stellung zur Hydroxylgruppe substituierte Pyrimidinol- oder Pyridinol-Verbindungen, wie sie in der Patentschrift DE 102011 077 248 B1 beschrieben sind, als Inhibitoren eingesetzt werden.

Als stabile *N*-Oxyl-Radikale können beispielsweise solche verwendet werden, wie sie in der DE 199 56 509 A1 und der DE 195 31 649 A1 beschrieben sind. Derartige stabile Nitroxylradikale sind vom Typ Piperidinyl-*N*-oxyl oder Tetrahydropyrrol-*N*-oxyl oder eine Mischung daraus.

Bevorzugte stabile Nitroxylradikale sind ausgewählt aus der Gruppe bestehend aus 1-Oxyl-2,2,6,6-tetramethylpiperidin, 1-Oxyl-2,2,6,6-tetramethylpiperidin-4-ol (ebenso als TEMPOL bezeichnet), 1-Oxyl-2,2,6,6-tetramethylpiperidin-4-on (ebenso als TEMPON bezeichnet), 1-Oxyl-2,2,6,6-tetramethyl-4-carboxyl-piperidin (ebenso als 4-Carboxy-TEMPO bezeichnet), 1-Oxyl-2,2,5,5-tetramethylpyrrolidin, 1-Oxyl-2,2,5,5-tetramethyl-3-carboxylpyrrolidin (ebenso als 3-Carboxy-PROXYL bezeichnet) und Mischungen aus zwei oder mehreren dieser Verbindungen, wobei 1-Oxyl-2,2,6,6-tetramethylpiperidin-4-ol (TEMPOL) besonders bevorzugt ist.

Bevorzugt sind der oder die Inhibitoren ausgewählt aus der Gruppe bestehend aus N-Oxyl-Radikalen, Catecholen, Catecholderivaten und Phenothiazinen und ein Gemisch von zwei ider mehreren davon. Besonders bevorzugt sind der oder die Inhibitoren ausgewählt aus der Gruppe bestehend aus Tempol, Catecholen und Phenothiazinen. Ganz besonders bevorzugt sind die in den Beispielen verwendeten Inhibitoren, bevorzugt etwa in den in den Beispielen angegebenen Mengen.

Die Inhibitoren können, abhängig von den gewünschten Eigenschaften des Reaktivharzes, entweder allein oder als Kombination von zweien oder mehreren davon verwendet werden. Die Kombination von phenolischen und nicht-phenolischen Inhibitoren ist bevorzugt.

Der Inhibitor oder die Inhibitormischung wird in der Fachwelt bekannten üblichen Mengen zugesetzt, bevorzugt in einer Menge von etwa 0,0005 bis etwa 2 Gew.-% (bezogen auf das - letztendlich damit hergestellte - Reaktivharz), stärker bevorzugt von etwa 0,01 bis etwa 1 Gew.-% (bezogen auf das Reaktivharz), noch stärker bevorzugt von etwa 0,05 bis etwa 1 Gew.-% (bezogen auf das Reaktivharz).

### Härterkomponente (B)

Für die Härtung der radikalisch härtbaren Verbindung wird ein Härtungsmittel verwendet.

Bevorzugt wird ein Härtersystem verwendet, welches das Härtungsmittel und einen Beschleuniger umfasst.

Dabei kann der Beschleuniger der Reaktivharzkomponente (A) zugegeben werden.

Die Härtung des Reaktivharzes kann mit einem Peroxid als Initiator initiiert werden. Dementsprechend beinhaltet in einer Ausführungsform das Härtersystem
- mindestens einen für die Härtung mit Peroxiden üblicherweise verwendeten Beschleuniger und
- als Initiator ein Peroxid.

Alle dem Fachmann bekannten Peroxide, die zum Härten von Epoxid(meth)acrylatharzen verwendet werden, können eingesetzt werden. Derartige Peroxide umfassen organische und anorganische Peroxide, entweder flüssig oder fest, wobei auch Wasserstoffperoxid verwendet werden kann. Beispiele geeigneter Peroxide sind Peroxycarbonate (der Formel -OC(O)OO-), Peroxyester (der Formel -C(O)OO-), Diacylperoxide (der Formel -C(O)OOC(O)-), Dialkylperoxide (der Formel -OO-), Hydroperoxide (der Formel -OOH) und dergleichen. Diese können als Oligomer oder Polymer vorliegen. Eine umfassende Reihe an Beispielen für geeignete Peroxide ist zum Beispiel in der Anmeldung US 2002/0091214 A1, Absatz [0018], beschrieben.

Bevorzugt sind die Peroxide aus der Gruppe der organischen Peroxide ausgewählt. Geeignete organische Peroxide sind: tertiäre Alkylhydroperoxide, wie tert-Butylhydroperoxid, und andere Hydroperoxide, wie Cumenhydroperoxid, Peroxyester oder Persäuren, wie tert-Butylperester (z.B. tert-Butylperoxybenzoat), Benzoylperoxid, Peracetate und Perbenzoate, Lauroylperoxid, einschließlich (Di)peroxyester, Perether, wie Peroxydiethylether, Perketone, wie Methylethylketonperoxid. Die als Härter verwendeten organischen Peroxide sind oft tertiäre Perester oder tertiäre Hydroperoxide, d.h. Peroxid-Verbindungen mit tertiären Kohlenstoffatomen, die direkt an eine -O-O-acyl- oder -OOH-Gruppe gebunden sind. Aber auch Gemische dieser Peroxide mit anderen Peroxiden können erfindungsgemäß eingesetzt werden. Die Peroxide können auch gemischte Peroxide sein, d.h. Peroxide, die zwei verschiedene Peroxid-tragende Einheiten in einem Molekül aufweisen. In einer bevorzugten Ausführungsform wird zum Härten Benzoylperoxid (BPO) oder tert-Butylperoxybenzoat verwendet.

Das Peroxid kann in seiner Reinform oder als Bestandteil einer Mischung verwendet werden. Typischerweise wird es als Bestandteil einer Mischung verwendet, insbesondere als Bestandteil einer Härterkomponente (B) eines Reaktivharz-Systems, wie es weiter unten genauer beschrieben wird. Die in den Beispielen verwendete Härterkomponente bzw. eine Härterkomponenten mit denselben Bestandteilen ist besonders bevorzugt.

Auch die Verwendung von organisch substituierten Ammoniumpersulfaten (beispielsweise N'N'N'N'-Tetrabutylammonium- oder N'N'N'-Tricapryl-N'-methylammoniumpersulfat ist möglich.

Neben dem Peroxid kann das Härtersystem noch ein Phlegmatisierungsmittel enthalten, um das Peroxid zu stabilisieren. Entsprechende Phlegmatisierungsmittel sind aus der DE 3226602 A1, EP 0432087 A1 und EP 1 371 671 A1 bekannt.

Ein solches Härtersystem enthält bevorzugt Wasser als Phlegmatisierungsmittel. Neben dem Wasser kann das Härtersystem noch weitere Phlegmatisierungsmittel enthalten, wobei Wasser als alleiniges Phlegmatisierungsmittel bevorzugt ist, um keine Verbindungen einzubringen, die eine weichmachende Wirkung haben.

Bevorzugt liegt das Peroxid zusammen mit dem Wasser als Suspension vor. Entsprechende Suspensionen sind in unterschiedlichen Konzentrationen kommerziell erhältlich, wie beispielsweise die wässrigen Dibenzoylperoxid-Suspensionen von United Initiators (z.B. BP40SAQ), Perkadox 40L-W (Fa. Nouryon), Luperox^{®} EZ-FLO (Fa. Arkema), Peroxan BP40W (Fa. Pergan).

Das Peroxid kann in einer Menge von 0,25 bis 35 Gew.-%, bevorzugt 1 bis 30 Gew.-%, besonders bevorzugt 5 bis 25 Gew.-%, bezogen auf die Härterkomponente, in der Härterkomponente enthalten sein.

In dem beschriebenen Härtersystem wird zusätzlich zu dem Peroxid ein Beschleuniger verwendet. Hierdurch wird die Härtungsreaktion beschleunigt. Dieser Beschleuniger wird der Reaktivharzkomponente zugegeben, um diesen räumlich getrennt vom Peroxid zu lagern und so dessen vorzeitigen Zerfall zu verhindern.

Geeignete Beschleuniger sind dem Fachmann bekannt. Diese sind zweckmäßig Amine.

Geeignete Amine sind unter folgenden Verbindungen ausgewählt, die beispielsweise in der Anmeldung US 2011071234 A1 beschrieben sind: Dimethylamin, Trimethylamin, Ethylamin, Diethylamin, Triethylamin, n-Propylamin, Di-n-propylamin, Tri-n-propylamin, Isopropylamin, Diisopropylamin, Triisopropylamin, n-Butylamin, Isobutylamin, tert-Butylamin, Di-n-butylamin, Diisobutylamin, Tri-isobutylamin, Pentylamin, Isopentylamin, Diisopentylamin, Hexylamin, Octylamin, Dodecylamin, Laurylamin, Stearylamin, Aminoethanol, Diethanolamin, Triethanolamin, Aminohexanol, Ethoxyaminoethan, Dimethyl(2-chloroethyl)amin, 2-Ethylhexylamin, Bis(2-chloroethyl)amin, 2-Ethylhexylamin, Bis(2-ethylhexyl)amin, N-Methylstearylamin, Dialkylamine, Ethylendiamin, N,N'-Dimethylethylendiamin, Tetramethylethylendiamin, Diethylentriamin, Permethyldiethylentriamin, Triethylentetramin, Tetraethylenpentamin, 1,2-Diaminopropan, Di-propylentriamin, Tripropylentetramin, 1,4-Diaminobutan, 1,6-Diaminohexan, 4-Amino-1-diethylaminopentan, 2,5-Diamino-2,5-dimethylhexan, Trimethylhexamethylendiamin, N,N-Dimethylaminoethanol, 2-(2-Diethylaminoethoxy)ethanol, Bis(2-hydroxyethyl)oleylamin, Tris-[2-(2-hydroxy-ethoxy)-ethyl]amin, 3-Amino-1-propanol, Methyl(3-aminopropyl)ether, Ethyl-(3-aminopropyl)ether, 1,4-Butandiol-bis(3-aminopropyl)ether, 3-Dimethylamino-1-propanol, 1-Amino-2-propanol, 1-Diethylamino-2-propanol, Diisopropanolamin, Methyl-bis(2-hydroxypropyl)amin, Tris(2-hydroxypropyl)amin, 4-Amino-2-butanol, 2-Amino-2-methylpropanol, 2-Amino-2-methyl-propandiol, 2-Amino-2-hydroxymethylpropandiol, 5-Diethylamino-2-pentanon, 3-Methylaminopropionsäurenitril, 6-Aminohexansäure, 11-Aminoundecansäure, 6-Aminohexansäureethylester, 11-Aminohexansäureisopropylester, Cyclohexylamin, N-Methylcyclohexylamin, N,N-Dimethylcyclohexylamin, Dicyclohexylamin, N-Ethylcyclohexylamin, N-(2-Hydroxyethyl)-cyclohexylamin, N,N-Bis-(2-hydroxyethyl)-cyclohexylamin, N-(3-Aminopropyl)-cyclohexylamin, Aminomethylcyclohexan, Hexahydrotoluidin, Hexahydrobenzylamin, Anilin, N-Methylanilin, N,N-Dimethylanilin, N,N-Diethylanilin, N,N-Di-propylanilin, iso-Butylanilin, Toluidine, Diphenylamin, Hydroxyethylanilin, Bis(hydroxyethyl)anilin, Chloranilin, Aminophenole, Aminobenzoesäuren und deren Ester, Benzylamin, Dibenzylamin, Tribenzylamin, Methyldibenzylamin, α-Phenylethylamin, Xylidin, Diisopropylanilin, Dodecylanilin, Aminonaphthalin, N-Methylaminonaphthalin, N,N-Dimethylaminonaphthalin, N,N-Dibenzylnaphthalin, Diaminocyclohexan, 4,4'-Diaminodicyclohexylmethan, Diamino-dimethyl-dicyclohexylmethan, Phenylendiamin, Xylylendiamin, Diaminobiphenyl, Naphthalindiamine, Benzidine, 2,2-Bis-(aminophenyl)-propan, Aminoanisole, Amino-thiophenole, Aminodiphenylether, Aminocresole, Morpholin, N-Methylmorpholin, N-Phenylmorpholin, Hydroxyethylmorpholin, N-Methylpyrrolidin, Pyrrolidin, Piperidin, Hydroxyethylpiperidin, Pyrrole, Pyridine, Chinoline, Indole, Indolenine, Carbazole, Pyrazole, Imidazole, Thiazole, Pyrimidine, Chinoxaline, Aminomorpholin, Dimorpholinethan, [2,2,2]-Diazabicyclooctan und N,N-Dimethyl-p-toluidin.

Bevorzugte Amine sind symmetrisch oder asymmetrisch substituierten Anilin- und Toluidin-Derivate und N,N-Bis(hydroxy)alkylarylamine, wie N,N,-Dimethylanilin, N,N-Diethylanilin, N,N-Dimethyl-p-toluidin, N,N-Bis(hydroxyalkyl)arylamine, N,N-Bis(2-hydroxyethyl)aniline, N,N-Bis(2-hydroxyethyl)toluidin, N,N-Bis(2-hydroxypropyl)anilin, N,N-Bis(2-hydroxypropyl)toluidin, N,N-Bis(3-methacryloyl-2-hydroxypropyl)-p-toluidin, N,N-Dibutoxyhydroxypropyl-p-toluidin, N-Methyl-N-hydroxyethyl-p-toluidin, N-Ethyl-N-hydroxyethyl-p-toluidin sowie die analogen o- oder m-Toluidine und 4,4'-Bis(dimethylamino)diphenylmethan und/oder die Leucoformen der Farbstoffe Kristallviolett oder Malachitgrün.

Polymere Amine, wie solche die durch Polykondensation von N,N-Bis(hydroxyalkyl)anilin mit Dicarbonsäuren oder durch Polyaddition von Ethylenoxid und diese Amine erhalten werden, sind ebenso als Beschleuniger geeignet.

Bevorzugte Beschleuniger sind N,N-Bis(2-hydroxypropyl)toluidine, N,N-Bis(2-hydroxyethyl)toluidine und para-Toluidin Ethoxylat (Bisomer^{®} PTE).

In dieser, bevorzugten, Ausführungsform kann der Beschleuniger in einer Menge von 0,01 bis 10 Gew.-%, bevorzugt 0,1 bis 5 Gew.-%, besonders bevorzugt 0,1 bis 3 Gew.-%, bezogen auf die Harzkomponente, in der Reaktivharzkomponente enthalten sein.

Alternativ kann für die Härtung ein Härtersystem verwendet werden, welches peroxidfrei ist und die Bestandteile
- mindestens eine Manganverbindung als Beschleuniger und
- eine 1,3-Dioxoverbindung als Initiator
beinhaltet. Hierzu wird auf die DE 10 2011 078 785 A1 verwiesen.

Geeignete 1,3-Dioxoverbindungen sind Verbindungen der allgemeinen Formel (III) 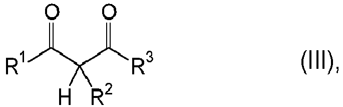 in der
R¹ und R³ jeweils unabhängig voneinander eine unverzweigte oder verzweigte, gegebenenfalls substituierte C₁-C₄-Alkylgruppe oder eine C₁-C₄-Alkoxygruppe sind,
R² eine unverzweigte oder verzweigte, gegebenenfalls substituierte C₁-C₄-Alkylgruppe oder eine C₁-C₄-Alkoxygruppe ist, oder zusammen mit R¹ oder R³ einen gegebenenfalls substituierten fünf- oder sechsgliedrigen aliphatischen Ring bildet, welcher gegebenenfalls Heteroatome im oder am Ring umfasst.

In diesem Härtersystem ist es wesentlich, dass in der Verbindung der Formel (III) das Kohlenstoffatom, welches die zwei Carbonylgruppen miteinander verbindet, genau ein an dieses Kohlenstoffatom gebundenes Wasserstoffatom aufweist.

Bevorzugt ist die Verbindung der allgemeinen Formel (III) eine Verbindung der Formel (IV) 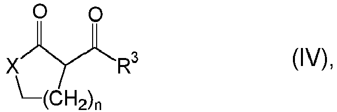 in der unabhängig X = C, O, n = 1, 2 und R³ eine unverzweigte oder verzweigte, gegebenenfalls substituierte C₁-C₄-Alkylgruppe oder eine C₁-C₄-Alkoxygruppe ist. X ist stärker bevorzugt O. n ist stärker bevorzugt 1. R³ ist stärker bevorzugt eine C₁-C₄-Alkylgruppe.

Besonders bevorzugt ist die Verbindung der Formel (III) 2-Methyl-2,4-pentandion, α-Acetylbutyrolacton, Cyclopentanon-2-carbonsäureethylester oder Cyclopentanon-2-carbonsäuremethylester, wobei α-Acetylbutyrolacton am stärksten bevorzugt ist.

Als Beschleuniger wird eine Manganverbindung, insbesondere ein Mangansalz oder ein Mangankomplex verwendet. Es können auch Gemische von Mangansalzen und/oder Mangankomplexen verwendet werden.

Als besonders geeignet haben sich Mangansalze oder Mangankomplexe, insbesondere basierend auf 1,3-Dioxoverbindungen, wie Acetylacetonat (Petan-2,4-dion), und Carbonsäuren, wie Naphthenate, Octoate, Ethylhexanoate oder gesättigte Fettsäuren, erwiesen. Hinsichtlich der Manganverbindung bestehen keine Einschränkungen. Zweckmäßig ist die Manganverbindung in unpolaren Lösungsmitteln löslich. Ganz besonders geeignet ist Mn(II)-octoat.

Ebenfalls alternativ kann für die Härtung ein Härtersystem verwendet werden, welches die Bestandteile:
- als Beschleuniger mindestens ein Metallsalz und
- als Initiator mindestens eine Thiol- und/oder Thiolester-Gruppen beinhaltende Verbindung,
beinhaltet.

Durch die Kombination bzw. das Mischen der beiden Bestandteile können Radikale gebildet werden, welche anstelle von bisher üblichen Radikalbildnern eine Polymerisation von nichtaromatischen Doppelbindungen, z.B. olefinischen Doppelbindungen, beispielsweise Acrylaten oder Methacrylaten, auslösen können.

Beispiele für Thiole sind Thioglycerin, Methyl-, Ethylmercaptan und höhere Homologe z.B. Dodecylmercaptan; Dimercaptane, wie Dimercaptopropansulfonsäure, Dimercaptobernsteinsäure, Dithiothreitol; Poly(ethylenglykol)dithiole, der allgemeinen Formel HS-[CH₂-CH₂-O]ₙ-CH₂-CH₂-SH, worin n für eine Zahl zwischen 0 bis 10 steht; flüssige Polysulfidpolymere mit Thiol-Endgruppen z.B. Thioplast G Typen der Firma Akzo Nobel; Polymercaptanhärter und -vernetzer z.B. SIQ-Amin 999 der Firma S.I.Q.-Kunstharze GmbH; ethoxylierte und/oder propoxylierte Alkohole aus Mono-, Di-, Tri-, Tetra-, Pentaolen und/oder anderen Polyolen mit Thiolendgruppen z.B. Capcure 3-800 der Firma Cognis, oder die nachfolgend als insbesondere geeigneten Thiole genannten Verbindungen. Als besonders geeigneter Thiolester sei hier der Octanthiolsäure-S-[3(triethoxysilyl)propyl]ester erwähnt. Beispiele für insbesondere geeignete Thiole sind Glykoldi(3-mercaptopropionat), Trimethylolpropantri(3-mercaptopropionat), Pentaerythritoltetra(3-mercaptopropionat), Dipentaerythritolhexa-3-mercaptopropionat, ethoxyliertes Trimethylolpropan-tris(3-mercaptopropionat) mit unterschiedlichen Ethoxylierungsgraden (z.B. ETTMP 700 und ETTMP 1300 der Firma Bruno Bock), Tris[2-(3-mercaptopropionyloxy)ethyl]isocyanurat, 3-Mercaptopropyltrimethoxysilan.

Als weitere Alternative kann für die Härtung ein Härtersystem verwendet werden, welches die folgenden Bestandteile beinhaltet:
- als Beschleuniger mindestens ein Metallsalz und
- als Initiator mindestens eine CH-acide Verbindung der Formel (V) 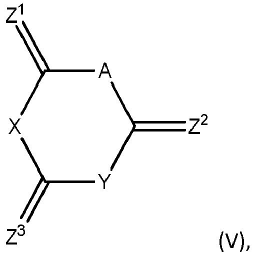 worin
   (i)
      -A- für -C(R¹)(R²)- steht,
      -X- für eine Bindung, für -NR³- oder für -(CR⁴R⁵)ₚ- steht, oder für -O- steht, Y für NR⁶ oder für (CR⁷R⁸)_{q} steht, oder für O steht,
      wobei wenn X für O steht auch Y für O steht;
      wobei vorzugsweise X für (CR⁴R⁵)ₚ steht und Y für CR⁷R⁸ steht,
      oder X für NR³ und Y für NR⁶ steht;
      Z¹ für O, S, S=O oder S(=O)₂ steht,
      Z² für O, S, S=O oder S(=O)₂ steht,
      Z³ für O, S, S=O oder S(=O)₂ oder für R⁹ und R¹⁰ steht,
      p für 1, 2 oder 3 steht, vorzugsweise für 1 oder 2
      q für 1, 2 oder 3 steht, vorzugsweise für 1;
      und die Reste R¹, R², R³, R⁴, R⁵, R⁶, R⁷, R⁸, R⁹ und R¹⁰ unabhängig voneinander für Wasserstoff, Alkyl, Aryl, Aralkyl, Cycloalkyl oder Cycloalkylalkyl stehen und jeweils unsubstituiert oder substituiert sind und/oder Heteroatome (anstelle von C-Atomen;
      vorzugsweise ausgewählt aus O, N, wie NH oder N-Alkyl, und S aufweisen, mit der Maßgabe, dass mindestens einer der Reste R¹ und R² Wasserstoff bedeutet,
      oder
   (ii) offenkettige Verbindungen,
      worin das die Brücke bildende Glied -C(=Z³)- fehlt,
      -A- für -C(R¹)(R²)- steht, X und Y unabhängig voneinander für eine jeweils unverzweigte oder verzweigte, unsubstituierte oder substituierte, gegebenenfalls Heteroatome (anstelle von C-Atomen; insbesondere ausgewählt aus O, N, wie NH oder N-Alkyl, und S) aufweisende C₁-C₄-Alkylgruppe oder C₁-C₄-Alkoxygruppe oder vorzugsweise für eine jeweils unsubstituierte oder substituierte, gegebenenfalls Heteroatome (anstelle von C-Atomen; insbesondere ausgewählt aus O, N, wie NH oder N-Alkyl, und S) aufweisende C₁-C₄-Alkoxycarbonylmethylgruppe oder C₁-C₄-Alkylcarbonylmethylgruppe stehen,
      R¹ und R² beide Wasserstoff bedeuten und
      Z¹ und Z² die genannten Bedeutungen haben;
      oder X für eine jeweils unverzweigte oder verzweigte, unsubstituierte oder substituierte, gegebenenfalls Heteroatome (anstelle von C-Atomen;
      insbesondere ausgewählt aus O, N, wie NH oder N-Alkyl, und S) aufweisende C₁-C₄-Alkylgruppe oder C₁-C₄-Alkoxygruppe oder C₁-C₄-Alkoxycarbonylmethylgruppe oder C₁-C₄-Alkylcarbonylmethylgruppe steht,
      Y und Z² gemeinsam mit dem bindenden Kohlenstoffatom -CN bedeuten,
      Z¹ die oben genannten Bedeutungen hat, und
      R¹ und R² jeweils wie oben definiert sind mit der Maßgabe, dass mindestens einer der Reste Wasserstoff bedeutet;
      und/oder Salze davon.

Bevorzugte Beispiele für solche Verbindungen sind 2,4,6-Pyrimidintrionderivate sind Barbitursäure (2,4,6-Pyrimidintrion) selbst, 1-Benzyl-5-phenylbarbitursäure (1-(Phenylmethyl)-5-Phenyl-2,4,6-Pyrimidintrion), 5-Butylbarbitursäure (5-Butyl-2,4,6-Pyrimidintrion), 1-Cyclohexyl-5-ethylbarbitursäure (1-Cyclohexyl-5-Ethyl-2,4,6-Pyrimidintron) oder 2-Thiobarbitursäure (4,6-Dihydroxy-2-Mercaptopyrimidin), 1,3-Cyclohexandion, 2-Methyl-1,3-cyclohexandion, 1,3-Cyclopentandion, 2-Methyl-1,3-cyclopentandion, 4,4-Dimethyl-1,3-cyclohexandion, 5,5-Dimethyl-1,3-cyclohexandion (Dimedon), 2,2-Dimethyl-1,3- dioxan-4,6-dion oder 2,2,5-Trimethyl-1,3-dioxan-4,6-dion, 3-Oxoglutarsäuredimethylester, und/oder Diethyl-1,3-acetondicarboxylat, Ethylcyanoacetat, Methylcyanoacetat oder 2-Ethylhexylcyanoacetat, oder in der DE 10 2011 078 785 genannte 1,3-Dioxoverbindungen.

Bei den als Beschleuniger in Form eines Metallsalzes, was auch Metallkomplexe und Metalloxide einschließt, verwendeten Komponenten handelt es sich in beiden Fällen vorzugsweise um ein oder mehrere Metallsalze oder insbesondere um Salze von organischen und/oder anorganischen Säuren mit Metallen, z.B. ausgewählt aus Kobalt, Zirkonium, Zink, Cer, Zinn, Wismut oder vorzugsweise Vanadium, Mangan, Kupfer oder Eisen, oder Gemischen von zwei oder mehr davon, wobei die organischen Säuren vorzugsweise gesättigt sind, wobei Vanadium und Eisen oder insbesondere Mangan und Kupfer, ggf. in Gegenwart eines oder zweier Co-Beschleuniger mit Metallanteil aus der Gruppe der oben genannten Metalle, bevorzugt ist, insbesondere in Form von Salzen oder Komplexen mit anorganischen Säuren und/oder Carboxylatresten, wie Carboxylaten mit CH₃, C₂-C₂₀-Alkyl, einem C₆-C₂₄-Arylrest oder C₇-C₃₀-Aralkylrest, beispielsweise Oktoat, z.B. 2-Ethylhexanoat (Isooctanoat), ferner Neodecanoat, oder Acetylacetonat. Besonders bevorzugt sind Mangancarbonat oder -carboxylate, wie Mnacetat oder Mn-octoat, Kupfercarboxylate, wie Kupferoctoat oder Kupfernaphthenat, Kupferchinolate, Eisencarboxylate, wie Eisenoctoat und/oder Vanadiumcarboxylate und/oder die Gruppe der Metallsalze mit anorganischen Säuren, welche beispielsweise Eisenchlorid, Eisensulfat und Kupferchlorid umfasst.

In einer weiteren Alternative kann für die Härtung ein Härtersystem verwendet werden, welches die folgenden Bestandteile
- als Beschleuniger mindestens ein Metallsalz und
- als Initiator mindestens ein Aldehyd und/oder Keton und mindestens ein primäres Amin, und/oder
- b2) mindestens ein Imin, welches ein oder mehrere Imin-Strukturinkremente der Formel (VI) beinhaltet: 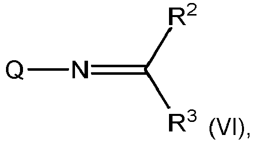 worin unabhängig voneinander:
   Q den organischen Rest des (jeweils) verwendeten Amins darstellt, oder für Wasserstoff steht; und
   R² und R³ unabhängig voneinander Wasserstoff und/oder einen unsubstituierten oder substituierten, gegebenenfalls Doppelbindungen und/oder Heteroatome aufweisenden, ein- oder mehrfach verzweigten oder geradkettigen organischen Rest, welcher mindestens eine aliphatische, heteroaliphatische, alicyclische oder heterocyclische Molekülstruktur, oder eine Kombination von zwei oder mehr der vorgenannten Molekülstrukturen beinhaltet, bedeutet;
   und/oder Salze davon,
beinhaltet.

Bevorzugt liegt das Molekulargewicht der Imin-Strukturinkremente der Formel (VI) beinhaltenden Imine bei 2000 Dalton (g/mol) oder niedriger, beispielsweise bei 1000 Dalton oder niedriger. Auch die Aldehyde und/oder Ketone haben jeweils vorzugsweise Molekulargewichte in diesen Bereichen.

Dieses Härtersystem kann als fertige Härterzusammensetzung (beispielsweise mit mikroverkapselten Bestandteilen a) und b)) vorliegen oder vorzugsweise erst bei der Mischung mit weiteren Bestandteilen einer Kunstharzzusammensetzung (gewissermaßen als Zusammensetzung (Mischung)) ausgeformt werden, beispielsweise bei der Verwendung.

Die beinhalteten bzw. verwendeten Aldehyde, Ketone, Amine, Aldimine oder Ketimine sind bekannt oder nach an sich bekannten Verfahren herstellbar/erhältlich bzw. werden vorzugsweise danach erhalten. Die Imine können vor der Anwendung (z.B. zur Befestigung von Verankerungselementen) oder auch erst "in situ" synthetisiert bzw. erhalten werden. Mögliche erfindungsgemäße Verfahren sind also (t) die separate vorherige Herstellung und/oder (tt) die "in situ" Herstellung, bei der der Aldehyd/Keton und das primäre Amin auf unterschiedliche Komponenten des Befestigungssystems aufgeteilt werden und beispielsweise am Ort der Anwendung vermischt werden und/oder (ttt) die "in situ" Herstellung in einer Komponente des Befestigungssystems, bei der der Aldehyd/Keton und das primäre Amin bei der Zubereitung der jeweiligen Komponente gemeinsam vermischt werden. Insbesondere die Imine gemäß (t) werden durch Kondensation unter Abspaltung von Wasser aus ein oder mehreren Aminen mit einem oder mehreren Aldehyden bzw. Ketonen erhalten. Entsprechende Reaktionsbedingungen für die separate vorherige Umsetzung (t) sind dem Fachmann bekannt.

Beispiele für geeignete Amine und Aldehyde oder Ketone finden sich insbesondere in der DE 10 2004 035 542 A1, EP 1 329 469 A1, EP 1 975 190 A1 und der EP 2 017 260.

Die als solche zugesetzten oder zur Synthese der Imine geeigneten primären Amine umfassen beispielsweise Mono-, Di- oder Polyamine, oder Mischungen von zwei oder mehr davon. Die einsetzbaren Mono-, Di- und/oder Polyamine können sowohl linear als auch verzweigt sein. Das Molekülgerüst der Mono- und/oder Di- und/oder Polyamine kann aliphatische, heteroaliphatische, alicyclische, heterocyclische, aromatische, aliphatisch-aromatische und Silan/Siloxan-Molekülstrukturen oder zwei oder mehr unabhängig ausgewählte davon enthalten. Im Molekül können primäre und/oder sekundäre und tertiäre Aminogruppen vorhanden sein, jedoch muss mindestens eine primäre Aminogruppe (-NH2), zur Ausbildung des Aldimins bzw. Ketimins, enthalten sein.

Die Mono-, Di- oder Polyamine sind bevorzugt aus der Gruppe der Alkyl- oder Alkylen(mono oder di)amine (wie z.B.: 2-Methylpentandiamin, oder 2,2,4- oder 2,4,4-Trimethylhexamethylendiamin), der Heteroalkyl- oder Heteroalkylen(mono oder di)amine (wie beispielsweise 1,13-Diamino-4,7,10-trioxatridecan, kommerziell erhältliche aminfunktionalisierte Polyoxyalkylene [Jeffamine] der Firma Huntsman Corp, oder z.B.: Triethylentetramin und/oder höhere Homologe), der Cycloalkyl- oder Cycloalkylen(mono oder di)amine (wie z.B.: Isophorondiamin, 1,3-Bisaminomethylcyclohexan, TCD-Diamin), der Heterocyloalkyl- oder Heterocycloalkylen(mono oder di)amine (wie z.B.: Aminoethylpiperazin), der Aminole bzw. Aminoalkohole (wie z.B. 1,3-Diaminopropan-2-ol), und der aliphatisch-aromatischen(mono oder di)amine (wie 1,3- oder 1,4-Benzoldimethanamin), ausgewählt und/oder aus der Gruppe der aminosilanisierten Füllstoffe.

Weiterhin bevorzugt können die Mono-, Di- oder Polyamine aus der Gruppe der Aminoamide, Polyaminoamide, Mannich-Basen und der Aminaddukte (Epoxid-Amin-Addukte wie beispielsweise in EP 0 387 418 A2 beschrieben, Isocyanat-Amin-Addukte [beispielsweise aus nicht umgesetzten Aminogruppen der Iminsynthese oder aus den oben genannten Aminolen - bei Verwendung der Aminole erfolgt bevorzugt zuerst die Umsetzung zum Imin und im Anschluss die Addition an das Isocyanat], Bucherer-Addukte und Michael-Additions-Addukte) ausgewählt sein.

Als Amine besonders interessant sind auch Aminoalkylsilane, die mindestens eine hydrolysierbare Gruppe, wie Alkoxy, z.B. Methoxy oder Ethoxy - am Silicium gebunden - beinhalten. Diese können (durch entstehendes Reaktionswasser oder zugeführtes Wasser) hydrolysieren und kondensieren und so Oligomere bilden, die mehrere Aminogruppen tragen und die REACH-Definition für Polymere erfüllen. Imine aus derartigen Aminoalkylsilanen bilden daher die Grundlage für besonders bevorzugte Verkörperungen der Erfindung. Bevorzugte derartige Aminoalkylsilane sind beispielsweise ausgewählt aus der Gruppe, die ein oder mehrere der folgenden Verbindungen umfasst: Aminoalkyltri- oder -dialkoxysilane, wie 3-Aminopropyltrimethoxysilan oder 3-Aminopropyltriethoxysilan, und N-(Aminoalkyl)amino-alkyltri-oder -dialkoxysilane, wie N-(2-Aminoethyl)-3-aminopropyltrimethoxysilan oder N-(2-Aminoethyl)-3-aminopropylmethyldimethoxysilan, ferner Ureidoalkyltrimethoxysilane, wie 3-Ureidopropyltrimethoxysilan.

In einer weiteren besonderen Ausführungsform der Erfindungsgegenstaende können als Polyamine aminosilanisierte Füllstoffe, die primaere Aminogruppen tragen, wie aminosilanbehandeltes Quarzmehl (z.B Silbond AST(R) der Fa. Quarzwerke GmbH), aminosilanbehandelte Kieselerde (z.B. Aktisil AM(R) von Hoffmann Mineral), oder aminosilan-behandelte pyrogene Kieselsäuren, vorgesehen und beinhaltet sein.

Bei den als solche zugesetzten oder zur Synthese der Aldimine und/oder Ketimine verwendbaren bzw. geeigneten Aldehyden und Ketonen handelt es sich insbesondere um solche der Formel (VII) 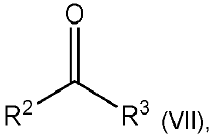 worin:
R², R³ unabhängig voneinander Wasserstoff und/oder einen unsubstituierten oder substituierten und/oder einen gegebenenfalls Doppelbindungen und/oder Heteroatome aufweisenden ein- oder mehrfach verzweigten oder geradkettigen organischen Rest, welcher aliphatische, heteroaliphatische, alicyclische, heterocyclische Molekülstrukturen und/oder Kombinationen aus den vorgenannten Molekülstrukturen umfassen kann, bedeutet.

Bevorzugt handelt es sich bei den Aldehyden und/oder Ketonen um Verbindungen, welche mindestens ein oder mehrere (primäre und/oder sekundäre) Wasserstoffatome am zur Carbonylgruppe stehenden alpha-Kohlenstoffatom aufweisen. Beispiele derartiger Aldehyde sind Propanal, Valeraldehyd, Isovaleraldehyd, oder Methoxyacetaldehyd, oder 3,7-Dimethyl-6-octenal (Citronellal) oder 3,7-Dimethyl-7-hydroxyoctanal (Hydroxycitronellal). Als derartige Ketone seien hier beispielhaft auch Methylisobutylketon, Aceton, oder Methylethylketon oder 6-Methyl-5-hepten-2-on erwähnt.

Besonders bevorzugt handelt es sich bei den Aldehyden und/oder Ketonen um Verbindungen, welche am zur Carbonylgruppe stehenden alpha-Kohlenstoffatom eine Doppelbindung und/oder Verzweigung aufweisen. Hierdurch weisen die besonders bevorzugten Aldehyde und/oder Ketone nur noch ein (tertiäres) Wasserstoffatom am zur Carbonylgruppe stehenden alpha-Kohlenstoffatom auf. Beispiele besonders bevorzugter Aldehyde sind Isobutyraldehyd, 2-Ethylhexanal, 2-Methylbutanal, 2-Ethylbutanal, 2-Methylvaleraldehyd, 2,3-Dimethylvaleraldehyd, Cyclohexylcarboxaldehyd, oder 3,7-Dimethyl-2,6-octadienal (Citral), 3-(4-tert-Butylphenyl)-2-methylpropanal (Lilial, Lysmeral), Tetrahydrofuran-3-carboxaldehyd, Tetrahydro-2-furancarboxaldehyd, 4-Formyltetrahydropyran, Tetrahydro-2H-pyran-2-carbaldehyd oder Tetrahydro-pyran-3-carbaldehyd. Als besonders bevorzugte Ketone seien hier beispielhaft Diisopropylketon, 3-Methyl-2-pentanon, 2-Methylcyclohexanon oder beta-Ionone genannt.

Die vorgenannten Beispiele für geeignete Amine, bevorzugte und besonders bevorzugte Aldehyde und/oder Ketone sollen den Umfang geeigneter Amine, Aldehyde und/oder Ketone nicht limitieren, sondern lediglich einige Beispielverbindungen mit den oben genannten, als geeignet, bevorzugt und als besonders bevorzugt definierten, Strukturmerkmalen zur Veranschaulichung aufzeigen.

Insbesondere bevorzugt sind auch die in den Beispielen genannten Aldehyde, Ketone bzw. synthetisierten Aldimine und/oder Ketimine und die als solche zugesetzten und/oder zur Synthese der Aldimine und/oder Ketimine verwendeten, spezifischen Amine, Ketone und Aldehyde, oder Gemische von zwei oder mehr davon.

Des Weiteren kann die Reaktivharzkomponente (A) übliche Füllstoffe und/oder Additive enthalten. Es sei darauf hingewiesen, dass einige Stoffe sowohl als Füllstoff und, ggf. in modifizierter Form, auch als Additiv verwendet werden können. Beispielsweise dient pyrogene Kieselsäure in ihrer polaren, nicht nachbehandelten Form eher als Füllstoff und in ihrer apolaren, nachbehandelten Form eher als Additiv. In Fällen, in denen genau derselbe Stoff als Füllstoff oder Additiv verwendet werden kann, soll seine Gesamtmenge die hierin festgelegte Obergrenze für Füllstoffe vorteilhafterweise nicht überschreiten.

Zur Herstellung einer Reaktivharzkomponente für bauliche Anwendungen, inbesondere für die chemische Befestigung, können dem Reaktivharz neben den erfindungsgemäß verwendeten Ziegelmehl weitere übliche Füllstoffe zugegeben werden. Diese Füllstoffe sind typischerweise anorganische Füllstoffe, wie beispielsweise weiter unten beschrieben.

Der Anteil der gesamten Füllstoffe (Ziegelmehl und übliche Füllstoffe) und Additive beträgt bevorzugt von etwa 50 bis etwa 80 Gew.-%, stärker bevorzugt von etwa 55 bis etwa 75 Gew.-%, noch stärker bevorzugt von etwa 60 bis etwa 70 Gew.-%, bezogen auf die Reaktivharzkomponente.

### Übliche (weitere) Füllstoffe

Zusätzlich zu dem erfindungsgemäß verwendeten Ziegelmehl finden übliche Füllstoffe, vorzugsweise mineralische oder mineralähnliche Füllstoffe, wie Quarz, Glas, Sand, Quarzsand, Quarzmehl, Porzellan, Korund, Keramik, Talkum, Kieselsäure (z.B. pyrogene Kieselsäure, insbesondere polare, nicht nachbehandelte pyrogene Kieselsäure), Silikate, Aluminiumoxide (z.B. Tonerde), Ton, Titandioxid, Kreide, Schwerspat, Feldspat, Basalt, Aluminiumhydroxid, Granit oder Sandstein, polymere Füllstoffe, wie Duroplaste, hydraulisch härtbare Füllstoffe, wie Gips, Branntkalk oder Zement (z.B. Aluminatzement (oft auch als Tonerdezement bezeichnet) oder Portlandzement), Metalle, wie Aluminium, Ruß, ferner Holz, mineralische oder organische Fasern, oder dergleichen, oder Gemische von zwei oder mehr davon Verwendung. Die Füllstoffe können in beliebigen Formen vorliegen, beispielsweise als Pulver oder Mehl, oder als Formkörper, z.B. in Zylinder-, Ring-, Kugel-, Plättchen-, Stäbchen-, Sattel- oder Kristallform, oder ferner in Faserform (fibrilläre Füllstoffe), und die entsprechenden Grundteilchen haben vorzugsweise einen maximalen Durchmesser von etwa 10 mm und einen Minimaldurchmesser von etwa 1 nm. Das heißt, der Durchmesser ist etwa 10 mm oder irgendein Wert von weniger als etwa 10 mm, aber mehr als etwa 1 nm. Bevorzugt ist der maximale Durchmesser ein Durchmesser von etwa 5 mm, bevorzugter von etwa 3 mm, noch bevorzugter von etwa 0,7 mm. Ganz besonders bevorzugt ist ein maximaler Durchmesser von etwa 0,5 mm. Der bevorzugtere Minimaldurchmesser ist etwa 10 nm, noch bevorzugter etwa 50 nm, ganz besonders bevorzugt etwa 100 nm. Durchmesserbereiche, die sich durch Kombination dieser maximalen Durchmesser und Minimaldurchmesser ergeben, sind besonders bevorzugt. Bevorzugt und deutlicher verstärkend wirken sich jedoch die globulären, inerten Stoffe (Kugelform) aus. Auch Core-Shell-Partikel, bevorzugt in Kugelform, können als Füllstoffe verwendet werden.

Bevorzugte Füllstoffe sind ausgewählt aus der Gruppe bestehend aus Zement, Kieselsäure, Quarz, Quarzsand, Quarzmehl, und Mischungen aus zwei oder mehreren davon. Für die Reaktivharzkomponente (A) besonders bevorzugt sind Füllstoffe ausgewählt aus der Gruppe bestehend aus Zement, pyrogener Kieselsäure, insbesondere unbehandelter, polarer pyrogener Kieselsäure, Quarzsand, Quarzmehl, und Mischungen aus zwei oder mehreren davon.

### Additive

Weitere denkbare Zusätze sind ferner Rheologieadditive, wie gegebenenfalls organisch oder anorganisch nachbehandelte pyrogene Kieselsäure (falls sie nicht schon als Füllstoff verwendet wird), insbesondere apolar nachbehandelte pyrogene Kieselsäure, Bentonite, Alkyl- und Methylcellulosen, Rhizinusölderivate oder dergleichen, Weichmacher, wie Phthalsäure- oder Sebacinsäureester, Stabilisatoren, Antistatikmittel, Verdickungsmittel, Flexibilisatoren, Härtungskatalysatoren, Rheologiehilfsmittel, Netzmittel, färbende Zusätze, wie Farbstoffe oder insbesondere Pigmente, beispielsweise zum unterschiedlichen Anfärben der Komponenten zur besseren Kontrolle von deren Durchmischung, oder dergleichen, oder Gemische von zwei oder mehr davon, möglich. Ferner können Mittel zur Regulierung des pH-Wertes, wie anorganische und/oder organische Säuren gemäß DE102010008971A1, insbesondere Copolymere mit sauren Gruppen, z.B. Estern der Phosphorsäure, eingesetzt werden. Auch nicht reaktive Verdünnungsmittel (Lösungsmittel) können, vorzugsweise in einer Menge bis zu 30 Gew.-%, bezogen auf die jeweilige Komponente (Reaktivharzmörtel, Härter), beispielsweise von 1 bis 20 Gew.-%, vorliegen, wie Niederalkylketone, z.B. Aceton, Diniederalkyl-niederalkanoylamide, wie Dimethylacetamid, Niederalkylbenzole, wie Xylole oder Toluol, Phthalsäureester oder Paraffine, oder Wasser, oder Glykole. Darüber hinaus können auch Mittel zur Verbesserung der Verträglichkeit zwischen Harz- und Härterkomponente, wie ionische, nichtionische oder amphotere Tenside; Seifen, Netzmittel, Detergenzien; Polyalkylenglykolether; Salze von Fettsäuren, Mono- oder Diglyceride von Fettsäuren, Zuckerglyceride, Lecithin; Alkansulfonate, Alkylbenzolsulfonate, Fettalkoholsulfate, Fettalkoholpolyglykolether, Fettalkoholethersulfate, sulfonierte Fettsäuremethylester; Fettalkoholcarboxylate; Alkylpolyglycoside, Sorbitanester, N-Methylglucamide, Saccharoseester; Alkylphenole, Alkylphenolpolyglykolether, Alkylphenolcarboxylate; quartäre Ammoniumverbindungen, Esterquats, Carboxylate quartärer Ammoniumverbindungen, verwendet werden. Ferner können Metallfänger in Form von oberflächenmodifizierten pyrogenen Kieselsäuren in der Reaktivharzkomponente enthalten sein. Bevorzugt ist mindestens ein Thixotropiermittel als Additiv vorhanden, besonders bevorzugt eine organisch oder anorganisch nachbehandelte pyrogene Kieselsäure, ganz besonders bevorzugt eine apolar nachbehandelte pyrogene Kieselsäure, z.B. mit Polydimethylsiloxan (PDMS) nachbehandelte pyrogene Kieselsäure, insbesondere bevorzugt die in den Beispielen verwendete apolar nachbehandelte pyrogene Kieselsäure.

In dieser Hinsicht wird Bezug genommen auf die Anmeldungen WO 02/079341 und WO 02/079293 sowie WO 2011/128061 A1.

In einer Ausführungsform kann die Reaktivharzkomponente zusätzlich einen Haftvermittler enthalten. Durch den Einsatz eines Haftvermittlers wird die Vernetzung der Bohrlochwand mit der Mörtelmasse verbessert, so dass sich die Haftung im ausgehärteten Zustand erhöht. Dies ist für die Verwendung einer Zweikomponenten-Dübelmasse z.B. in mit einem Diamantbohrer gebohrten Bohrlöchern von Bedeutung und erhöht die Versagensverbundspannung. Geeignete Haftvermittler sind aus der Gruppe der Silane, die mit weiteren reaktiven organischen Gruppen funktionalisiert sind und in das Polymernetzwerk eingebunden werden können, ausgewählt. Diese Gruppe umfasst z.B. 3-(Meth)acryloyloxypropyltrimethoxysilan, 3-(Meth)acryloyloxypropyltriethoxysilan, 3-(Meth)acryloyloxymethyltrimethoxysilan, 3-(Meth)acryloyloxymethyltriethoxysilan, Vinyltrimethoxysilan, Vinyltriethoxysilan, funktionalisiertes Tetraethoxysilan, funktionalisiertes Tetramethoxysilan, funktionalisiertes Tetrapropoxysilan, funktionalisiertes Ethyl- oder Propylpolysilikat, und Gemische von zwei oder mehr davon. In dieser Hinsicht wird Bezug genommen auf die Anmeldung DE 10 2009 059210, deren diesbezüglicher Inhalt hiermit in diese Anmeldung aufgenommen wird.

Der Haftvermittler ist zweckmäßig in Mengen von etwa 1 bis etwa 10 Gew.-% bezogen auf das Gesamtgewicht der Reaktivharzkomponente (A) enthalten.

Des Weiteren ist es bevorzugt, dass die Reaktivharzkomponente (A) auch ein Thixotropiermittel enthält, vorzugsweise apolar nachbehandelte pyrogene Kieselsäure, besonders bevorzugt mit Polydimethylsiloxan (PDMS) nachbehandelte pyrogene Kieselsäure, ganz besonders bevorzugt apolar nachbehandelte pyrogene Kieselsäure.

In einer besonders bevorzugten Ausführungsform sind die Bestandteile des Reaktivharzes bzw. der Reaktivharzkomponente (A) eines oder mehrere der Bestandteile, welche in den erfindungsgemäßen Beispielen genannt werden. Ganz besonders bevorzugt sind Reaktivharze bzw. Reaktivharzkomponenten, welche dieselben Bestandteile enthalten oder aus denselben Bestandteilen bestehen, wie sie in den einzelnen erfindungsgemäßen Beispielen genannt werden, und zwar bevorzugt in etwa in den dort genannten Anteilen.

Ein weiterer Gegenstand der vorliegenden Erfindung ist ein Mehrkomponenten-System, welches eine erfindungsgemäße Reaktivharzkomponente (A) und eine Härterkomponente (B), wobei die Härterkomponente (B) ein Härtungsmittel für das Reaktivharz umfasst.

Das erfindungsgemäße Mehrkomponenten-System kann in Form eines Patronen-Systems, eines Kartuschen-Systems oder eines Folienbeutel-Systems vorliegen. Bei der bestimmungsgemäßen Verwendung des Systems werden die Komponenten entweder unter Einwirkung mechanischer Kräfte oder durch Gasdruck aus den Patronen, Kartuschen oder Folienbeuteln ausgepresst, miteinander vermischt, vorzugsweise mit Hilfe eines Statikmischers, durch den die Bestandteile hindurchgeführt werden, und in das Bohrloch eingeführt, wonach die zu befestigenden Einrichtungen, wie Ankergewindestangen und dergleichen, in das mit dem aushärtenden Reaktivharz beschickte Bohrloch eingebracht und entsprechend justiert werden.

Das erfindungsgemäße Mehrkomponenten-System findet vor allem im Baubereich Verwendung, etwa zur Instandsetzung von Beton, als Polymerbeton, als Beschichtungsmasse auf Kunstharzbasis oder als kalthärtende Straßenmarkierung. Besonders eignet es sich zur chemischen Befestigung von Verankerungsmitteln, wie Ankern, Bewehrungseisen, Schrauben und dergleichen, in Bohrlöchern, insbesondere in Bohrlöchern in verschiedenen Untergründen, insbesondere mineralischen Untergründen, wie solche auf der Grundlage von Beton, Porenbeton, Ziegelwerk, Kalksandstein, Sandstein, Naturstein, Glas und dergleichen, und metallischen Untergründen, wie solche aus Stahl. In einer Ausführungsform ist der Untergrund des Bohrlochs Beton, und das Verankerungsmittel besteht aus Stahl oder Eisen. In einer weiteren Ausführungsform ist der Untergrund des Bohrlochs Stahl, und das Verankerungsmittel besteht aus Stahl oder Eisen.

Das erfindungsgemäße Mehrkomponenten-System wird insbesondere zur Befestigung von Verankerungsmitteln in Bohrlöchern verschiedenen Untergrunds und zum baulichen Kleben verwendet. In einer Ausführungsform ist der Untergrund des Bohrlochs Beton, und das Verankerungsmittel besteht aus Stahl oder Eisen. In einer weiteren Ausführungsform ist der Untergrund des Bohrlochs Stahl, und das Verankerungsmittel besteht aus Stahl oder Eisen. Bevorzugt hat das Stahl-Bohrloch Rillen.

Ein weiterer Gegenstand der Erfindung ist die Verwendung von Ziegelmehl als Füllstoff in einem Mehrkomponenten-System mit einer Reaktivharzkomponente (A) und einer Härterkomponente (B) zur Erhöhung der Leistungsfähigkeit einer Befestigungsanordnung umfassend eine aus dem Mehrkomponenten-System hergestellte Mörtelmasse und ein Befestigungsmittel, wobei die aus dem Mehrkomponenten-System hergestellte Mörtelmasse in ein mit Wasser gefülltes Bohrloch appliziert wird.

In einer bevorzugten Ausführungsform umfasst die Reaktivharzkomponente (A) als Reaktivharz eine radikalisch härtbare Verbindung. Für die radikalisch härtbare Verbindungen gelten alle zuvor beschriebenen Ausführungsformen.

In einer alternativen Ausführungsform ist es auch möglich, dass die Reaktivharzkomponente (A) ein härtbares Epoxidharz umfasst. In diesen Fällen kommt im Mehrkomponenten-System üblicherweise als Härterkomponente (B) ein Amin zur Härtung des Epoxidharzes zum Einsatz. Besonders bevorzugte Reaktivharzkomponenten (A) und Härterkomponenten (B) sind in den Patentschriften WO2020/058018 A1, WO2020/058017 A1, WO2020/058015 A1 und WO2020/05816 A1 beschrieben, deren Inhalte hiermit in die vorliegende Anmeldung aufgenommen werden. Die Erfindung wird im Folgenden anhand einer Reihe von Beispielen näher erläutert. Alle Beispiele und Abbildungen stützen den Umfang der Ansprüche. Die Erfindung ist jedoch nicht auf die spezifischen, in den Beispielen und Abbildungen gezeigten Ausführungsformen beschränkt.

### AUSFÜHRUNGSBEISPIELE

Alle hier aufgelisteten Bestandteile der Zusammensetzungen sind - soweit nicht anders angegeben - kommerziell erhältlich und wurden in der kommerziell üblichen Qualität eingesetzt.

Alle in den Beispielen gemachten %-Angaben beziehen sich auf das Gesamtgewicht der beschriebenen Zusammensetzung als Kalkulationsbasis, soweit nicht anders angegeben.

Hinsichtlich des verwendeten PEG200DMA ist anzumerken, dass die Anzahl der Ethylenglykol-Wiederholeinheiten n nicht eindeutig ist. Aus der Produktbezeichnung, PEG200DMA, kann geschlossen werden, dass dem Monomer ein Polyethylenglykol der Molmasse 200 g/mol zugrunde liegt. Das entspricht für die Formel HO-(-CH₂-CH₂-O-)ₙ-H einem Wert für n=4,2. Berücksichtigt man bei der der Molmasse nur die Wiederholeinheiten (-CH₂-CH₂-O-)ₙ, kann n=4,5 angegeben werden. Da es sich bei PEG200, aus dem PEG200-Dimethacrylat hergestellt wird, um ein technisches Produkt handelt und die Hersteller des genannten Dimethacrylates (Sartomer, Evonik sowie GEO Speciality Chemicals) in ihren technischen Datenblättern n=4 bzw. n∼4 angeben, wird primär von dieser Angabe ausgegangen.

### Liste der in den Beispielen und Referenzen verwendeten Bestandteile (Erklärung der Abkürzungen) sowie ihrer Handelsnamen und Bezugsquellen:

**Tabelle 1: In den Reaktivharzkomponenten (A) verwendete Bestandteile**

| | **Beschreibung** |
|---|---|
| TUMA | Urethanmethacrylat-Harz gemäß WO2019/007667, Beispiel A1 |
| UMA121 | Urethanmethacrylat-Harz gemäß WO2019/007667, Beispiel C1 |
| E3BADMA | Dimethacrylat mit jeweils 3 Ethylenoxid-Einheiten alkoxyliertem Bisphenol-A; Handelsname: SR348C (Fa.Sartomer) |
| bisGMA | Epoxymethacrylat-Harz Handelsname: Ecocryl 05345 (Fa. Momentive) |
| HPMA | Hydroxypropylmethacrylat; Handelsname:Visiomer HPMA (Fa. Evonik) |
| 1,4-BDDMA | 1,4-Butandioldimethacrylat; Handelsname:Visiomer 1,4-BDDMA (Fa. Evonik) |
| TCDDMA | Tricyclodecanedimethanoldimethacrylate; Handelsname:SR834 (Fa. Sartomer) |
| PEG200DMA | Polyethylenglykol(200)Dimethacrylat; Handelsname: Visiomer PEG200DMA (Fa. Evonik) |
| DIIPT | Diisopropanolparatoluidin (Fa. BASF) |
| Catechol | 1,2-Dihydroxybenzol Handelsname: Catechol Flakes (Fa. Rhodia) |
| Tempol | 4-Hydroxy-2,2,6,6-tetramethylpiperidinyloxyl; Handelsname: 4-Hydroxy-TEMPO (Fa. BASF) |
| tBBK | 4-tert.-Butylbrenzkatechin; Handelsname: keiner (Fa. Aldrich) |
| F32 | Quarzsand F32 (Fa. Quarzwerke Frechen) |
| Secar 80 | Calciumaluminatzement (Fa. Kerneos SA) |
| TS720 | Pyrogene Kieselsäure (Fa. Cab-O-Sil) |
| Millisil W3 | Quarzsand (Fa. Quarzwerkgruppe) |
| Ternal White | Calciumaluminatzement (Fa. Imerys) |

**Tabelle 2: In den Härterkomponenten (B) verwendete Bestandteile**

| | **Beschreibung** |
|---|---|
| BP35SAQ | Dibenzoylperoxid in Wasser (Fa. United Initiators) |
| BP40SAQ | Dibenzoylperoxid in Wasser (Fa. United Initiators) |
| Perkadox 20S | Mischung aus Dibenzoylperoxid und Gips (Fa. Nouryon) |
| Millisil W6 | Quarz (Fa. Quarzwerke Frechen) |
| Millisil W12 | Quarz (Fa. Quarzwerke Frechen) |
| RG4000 | Kalziniertes Aluminiumoxid (Fa. Almatis) |
| Albawhite 10 | Bariumsulfat (Fa. Sachtleben Minerals) |
| Axilat RH23 | Xanthangum (Fa. Worlée) |
| Kaliumdihydrogenphosphat | Kaliumdihydrogenphosphat (Fa. Merck) |
| Aerosil 200 | Hydrophile pyrogene Kieselsäure (Fa. Evonik) |

Als Ziegelmehl wurden Ziegelmehle von verschiedenen Herstellern verwendet, die vor Verwendung gesiebt wurden. Hierzu wurden Siebe (Fa. Retsch GmbH) mit entsprechender Maschenweite verwendet. Die verwendeten Ziegelmehle sind in der nachfolgenden Tabelle aufgelistet:

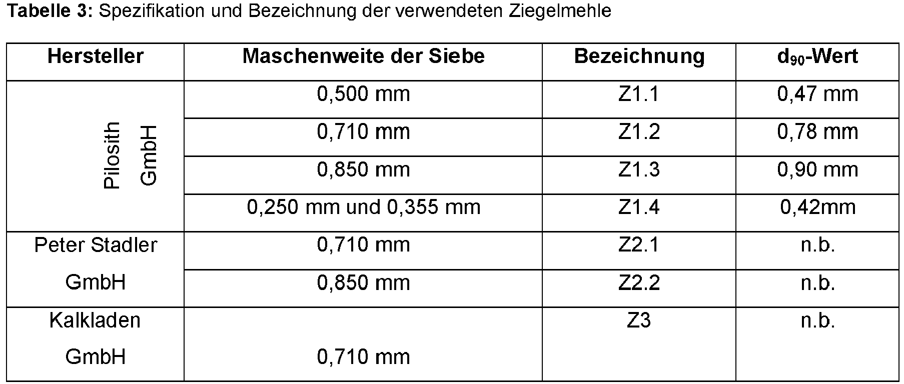

Alle Ziegelmehle wurden im Ofen bei einer Temperatur von 120 °C für 48 Stunden getrocknet. Die Ziegelmehle weisen einen Wassergehalt von weniger als 0,2 Gew.-% auf.

### Herstellung der Reaktivharzmischungen HA

Alle in Tabelle 4 enthaltenen Bestandteile der jeweiligen Reaktivharzmischung (HA) wurden in einen Kunststoffbecher gegeben und auf einem Magnetrührer bei Raumtemperatur gerührt, bis eine Lösung entstand.

**Tabelle 4: Zusammensetzung der Reaktivharzmischungen HA1 bis HA5 in Gew.-%**

| | **HA1** | **HA2** | **HA3** | **HA4** | **HA5** |
|---|---|---|---|---|---|
| TUMA | 45,0 | - | - | - | - |
| UMA-121 | - | 37,5 | 37,7 | - | - |
| E3BADMA | - | - | - | 70 | - |
| BisGMA | - | - | - | - | 40 |
| HPMA | 17,7 | 19,8 | 20 | 10 | - |
| 1,4-BDDMA | 34,6 | 40,0 | 40,15 | 17,3 | 28,8 |
| TCDDMA | - | - | - | - | 15,0 |
| PEG200DMA | - | - | - | - | 15,0 |
| DIIPT | 2,30 | 2,30 | 1,7 | 2,3 | 1,1 |
| Catechol | 0,27 | 0,27 | - | 0,27 | - |
| tBBK | 0,09 | 0,09 | - | 0,09 | 0,1 |
| Tempol | 0,04 | 0,04 | 0,45 | 0,04 | - |
| Summe | 100,0 | 100,0 | 100,0 | 100,0 | 100,0 |

### Herstellung der Reaktivharzkomponente A1 bis A19

Zur Herstellung der Reaktivharzkomponenten A1 bis A19 wurden jeweils die in den nachfolgenden Tabellen angegebenen Bestandteile zusammengegeben und in einem Dissolver (PC-Laborsystem, Typ 0.3-1) für 8 Minuten bei 3500 U/min unter Vakuum (≤ 100 mbar) mit 55 mm Dissolverscheibe und einem Randabstreifer vermischt.

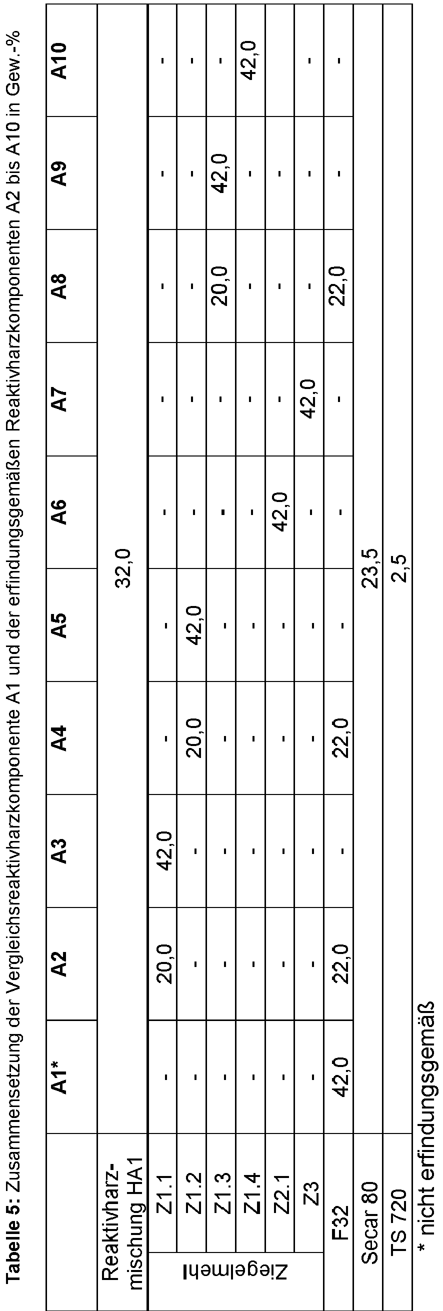

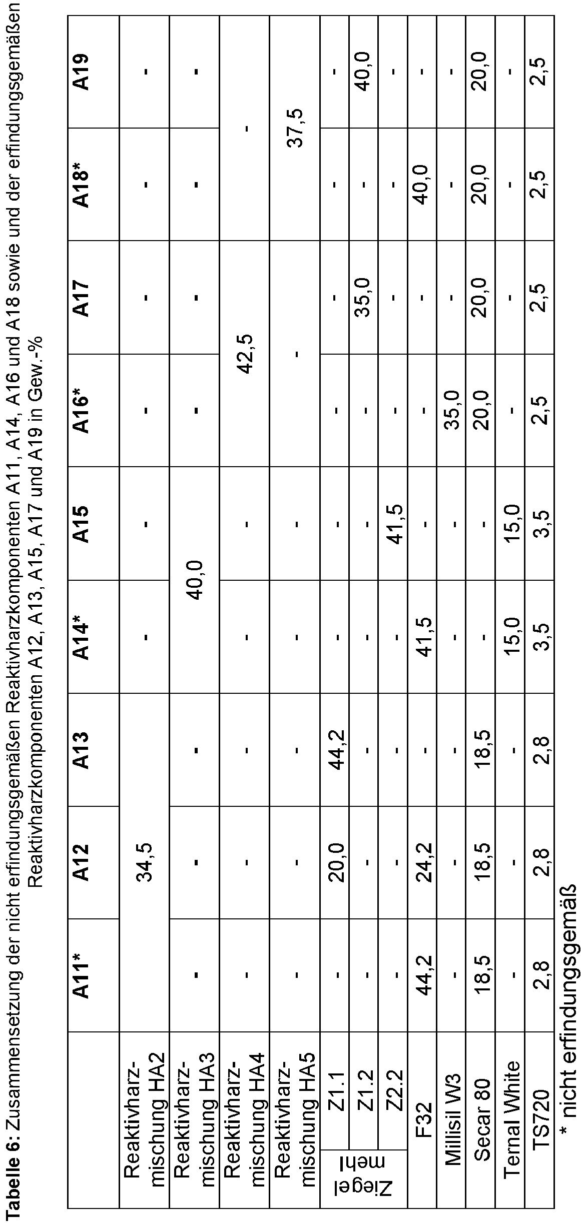

### Herstellung der Härterkomponenten (B)

Die in den Beispielen verwendeten Härterkomponenten (B) wurden hergestellt, indem alle in Tabelle 7 angegebenen Bestandteile zusammengegeben wurden und in einem Dissolver (Typ LDV 0.3-1) für 8 Minuten bei 3500 U/min unter Vakuum (Druck ≤ 100 mbar) mit einer 55 mm Dissolverscheibe und einem Randabstreifer vermischt wurden.

**Tabelle 7: Bestandteile der Härterkomponenten B1 bis B5 in Gew.-%**

| | **B1** | **B2** | **B3** | **B4** | **B5** |
|---|---|---|---|---|---|
| BP 35 SAQ | 35,0 | - | - | - | - |
| BP 40 SAQ | - | 55,0 | 14,6 | 7,3 | 2,4 |
| Perkadox 20S | - | 13,0 | - | - | - |
| Wasser | - | - | 20,8 | 18,4 | 18,7 |
| Millisil W6 | 44,0 | 31,0 | - | 39,75 | 56,0 |
| Millisil W12 | - | - | 62,3 | - | - |
| RG 4000 | 20,0 | - | - | - | 21,6 |
| Albawhite 10 | - | - | - | 31,35 | - |
| Axilat RH23 | | | | | 0,3 |
| Kaliumdihydrogenphosphat | - | 0,25 | 0,2 | 0,2 | 0,2 |
| Aerosil 200 | 1,0 | 0,75 | 2,1 | 3,0 | 0,8 |

### Herstellung der Mörtelmassen

Zur Herstellung der Mörtelmassen wurden jeweils eine der Reaktivharzkomponenten A1 bis A4 und eine der Härterkomponenten B1 bis B5 gemäß Tabelle 8 in Hartkartuschen im angegebenen Volumenverhältnis abgefüllt und über einen Statikmischer (HIT-RE-M, Hilti AG) aus den Kartuschen in ein mit Wasser gefülltes Bohrloch appliziert.

### Bestimmung der Lastwerte (B8-Werte)

Zur Bestimmung der Verbundspannungen (Lastwerte) der ausgehärteten Mörtelmassen verwendete man eine hochfeste Ankergewindestange M12, die in ein mit Wasser gefülltes Bohrloch mit einem Durchmesser von 14 mm und einer Bohrlochtiefe von 72 mm in C20/25 Beton mit der jeweiligen chemischen Mörtelmasse bei ca. 20°C eingedübelt wurde. Man ermittelte die mittlere Versagenslast durch zentrisches Ausziehen der Ankergewindestange mit enger Abstützung. Es wurden jeweils fünf Ankergewindestangen eingedübelt und nach einer Aushärtezeit von 24 Stunden bei Raumtemperatur wurden die Lastwerte bestimmt. Die hierbei ermittelten mittleren Lastwerte (Durchschnitt der fünf Messungen) sind in der (nachfolgenden) Tabelle 8 aufgeführt.

**Tabelle 8: Aus den Reaktivharzkomponente A und den Härterkomponenten B hergestellte Mörtelmassen sowie die bei den Auszugsversuchen ermittelten Lastwerte**

| **Beispiel** | **Reaktivharzkomponente A** | **Härterkomponente B** | **Mischungsverhältnis A:B** | **Lastwert B8 in N/mm²** |
|---|---|---|---|---|
| *1** | *1* | *1* | *5:1* | *16,04* |
| *2* | *2* | *1* | *5:1* | *16,90* |
| *3* | *3* | *1* | *5:1* | *17,46* |
| *4* | *4* | *1* | *5:1* | *18,33* |
| *5* | *5* | *1* | *5:1* | *19,51* |
| *6* | *6* | *1* | *5:1* | *18,77* |
| *7* | *7* | *1* | *5:1* | *18,94* |
| *8* | *8* | *1* | *5:1* | *17,42* |
| *9* | *9* | *1* | *5:1* | *20,44* |
| *10* | *10* | *1* | *5:1* | *20,28* |
| *11** | *11* | *1* | *5:1* | *14,13* |
| *12* | *12* | *1* | *5:1* | *15,58* |
| *13* | *13* | *1* | *5:1* | *16,04* |
| *14** | *1* | *2* | *10:1* | *16,74* |
| *15* | *3* | *2* | *10:1* | *18,55* |
| *16** | *14* | *3* | *3:1* | *8,17* |
| *17* | *15* | *3* | *3:1* | *10,88* |
| *18** | *16* | *1* | *5:1* | *14,43* |
| *19* | *17* | *1* | *5:1* | *17,70* |
| *20** | *18* | *4* | *3:1* | *12,09* |
| *21* | *19* | *4* | *3:1* | *13,31* |
| *22** | *18* | *5* | *3:1* | *17,36* |
| *23* | *19* | *5* | *3:1* | *18,44* |

| | | | | |
|---|---|---|---|---|
| * nicht erfindungsgemäß | | | | |

Die Ergebnisse der Tabelle 8 zeigen, dass durch die erfindungsgemäße Verwendung von Ziegelmehl als Füllstoff in Mörtelmassen zur Herstellung chemischer Dübel eine Erhöhung der Lastwerte im wassergefüllten Bohrloch im Vergleich zu den Referenzbeispielen, die kein Ziegelmehl enthalten, erzielt werden kann.

Die nachfolgende Tabelle zeigt die Bestandteile eines Mehrkomponenten-Systems umfassend in der Reaktivharzkomponente (A) mindestens ein Epoxidharz und in der Härterkomponente (B) mindestens ein Amin als Härter für das Epoxidharz.

Die Reaktivharzkomponenten (A), die Härterkomponenten (B), das aus diesen beiden Komponenten hergestellte Mehrkomponenten-System sowie die entsprechende Mörtelmasse wurden in Analogie zum experimentellen Teil der Patentschrift WO2020/058018 A1 hergestellt. Die Applikation der Mörtelmassen und die Auszugsversuche erfolgte wie bereits vorstehend beschrieben.

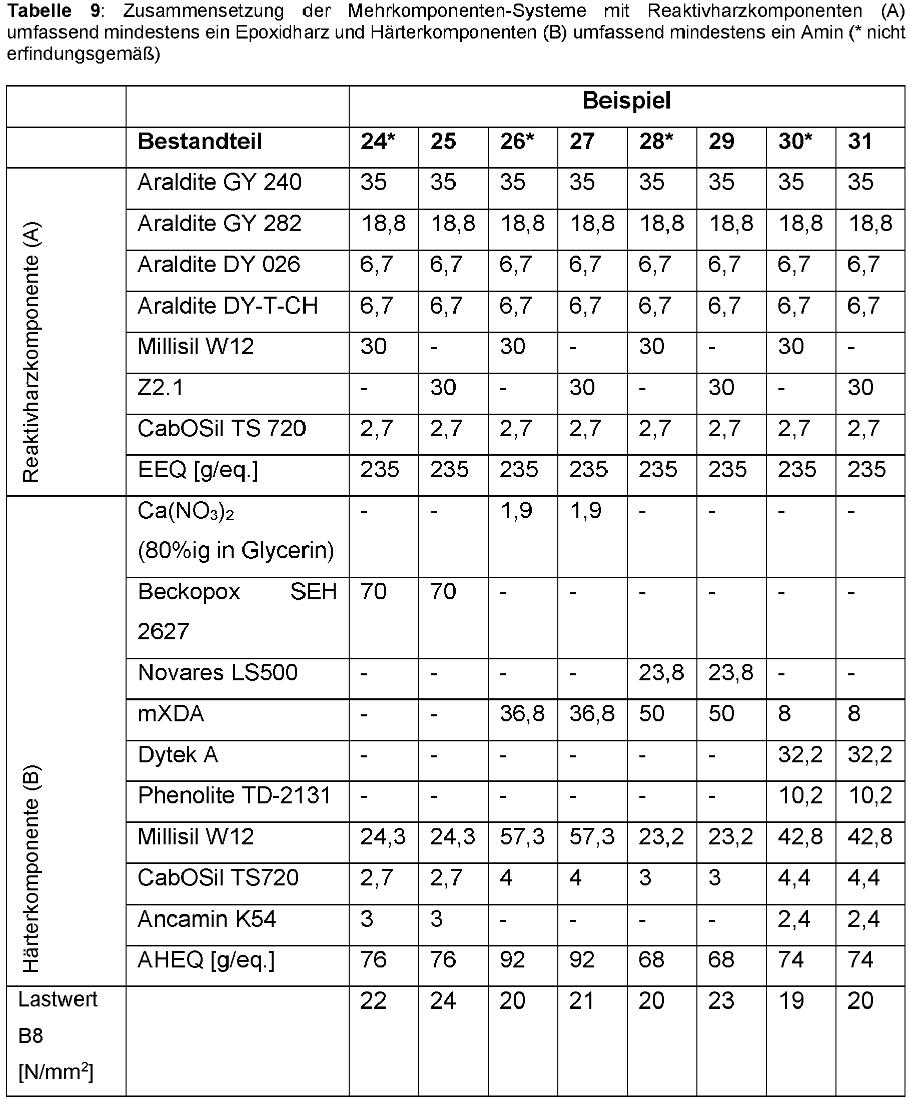

## Patentansprüche

1. Reaktivharzkomponente (A) mit mindestens einer radikalisch härtbaren Verbindung als Reaktivharz, **dadurch gekennzeichnet, dass** die Reaktivharzkomponente (A) Ziegelmehl enthält.

2. Reaktivharzkomponente (A) gemäß Anspruch 1, **dadurch gekennzeichnet, dass** die Reaktivharzkomponente (A) mindestens 10 Gew.-% Ziegelmehl bezogen auf das Gesamtgewicht der Reaktivharzkomponente (A) enthält.

3. Reaktivharzkomponente (A) gemäß Anspruch 2, **dadurch gekennzeichnet, dass** die Reaktivharzkomponente (A) 20 bis 60 Gew.-% Ziegelmehl bezogen auf das Gesamtgewicht der Reaktivharzkomponente (A) enthält.

4. Reaktivharzkomponente (A) gemäß einem der Ansprüche 1 bis 3, **dadurch gekennzeichnet, dass** das Ziegelmehl einen d₉₀-Wert von ≤ 0,90 mm aufweist.

5. Reaktivharzkomponente (A) gemäß Anspruch 4, **dadurch gekennzeichnet, dass** das Ziegelmehl einen d₉₀-Wert im Bereich von 0,9 mm bis 0,2 mm aufweist.

6. Reaktivharzkomponente (A) gemäß einem der vorhergehenden Ansprüche, **dadurch gekennzeichnet, dass** das Ziegelmehl einen Wassergehalt von weniger als 1 Gew.-% aufweist.

7. Reaktivharzkomponente (A) gemäß einem der vorhergehenden Ansprüche, **dadurch gekennzeichnet, dass** die radikalisch härtbare Verbindung aus der Gruppe bestehend aus Verbindungen auf Urethan(meth)acrylatbasis, Verbindungen auf Epoxy(meth)acrylatbasis, Methacrylate von alkoxylierten Bisphenolen, Verbindungen auf Basis weiterer ethylenisch ungesättigter Verbindungen und Kombinationen davon ausgewählt ist.

8. Reaktivharzkomponente (A) gemäß irgendeinem der vorhergehenden Ansprüche, **dadurch gekennzeichnet, dass** die Reaktivharzkomponente (A) mindestens einen Reaktivverdünner umfasst.

9. Reaktivharzkomponente (A) gemäß irgendeinem der vorhergehenden Ansprüche, **dadurch gekennzeichnet, dass** die Reaktivharzkomponente (A) ferner einen Inhibitor, einen Beschleuniger und/oder weitere Additive umfasst.

10. Mehrkomponenten-System umfassend eine Reaktivharzkomponente (A) gemäß einem der Ansprüche 1 bis 9 und eine Härterkomponente (B), die ein Härtungsmittel für das Reaktivharz umfasst.

11. Mehrkomponenten-System gemäß Anspruch 10, **dadurch gekennzeichnet, dass** das Härtungsmittel ein Peroxid umfasst.

12. Mehrkomponenten-System gemäß irgendeinem der Ansprüche 10 oder 11, **dadurch gekennzeichnet, dass** das Mehrkomponenten-System ein Zweikomponenten-System ist.

13. Verwendung einer Reaktivharzkomponente (A) gemäß irgendeinem der Ansprüche 1 bis 9 oder eines Mehrkomponenten-Systems gemäß irgendeinem der Ansprüche 10 oder 11 zur chemischen Befestigung von Verankerungsmitteln in Bohrlöchern oder zum baulichen Kleben.

14. Verwendung von Ziegelmehl in einem Mehrkomponenten-System mit einer Reaktivharzkomponente (A) und einer Härterkomponente (B) zur Erhöhung der Leistungsfähigkeit einer Befestigungsanordnung umfassend eine aus dem Mehrkomponenten-System hergestellte Mörtelmasse und ein Befestigungsmittel, wobei die aus dem Mehrkomponenten-System hergestellte Mörtelmasse in ein mit Wasser gefülltes Bohrloch appliziert wird.

15. Verwendung gemäß Anspruch 14, **dadurch gekennzeichnet, dass** die Reaktivharzkomponente (A) eine radikalisch härtbare Verbindung als Reaktivharz umfasst.
